(19) Europäisches Patentamt
European Patent Office
Office européen des brevets

(11) **EP 4 709 004 A1**

(12) **EUROPEAN PATENT APPLICATION**
published in accordance with Art. 153(4) EPC

(43) Date of publication:
**11.03.2026 Bulletin 2026/11**

(21) Application number: **24813879.4**

(22) Date of filing: **01.04.2024**

(51) International Patent Classification (IPC):
**H04W 72/0453** (2023.01)

(52) Cooperative Patent Classification (CPC):
**H04W 8/24; H04W 72/0453; H04W 72/1268;**
**H04W 76/15**

(86) International application number:
**PCT/CN2024/085383**

(87) International publication number:
**WO 2024/244673 (05.12.2024 Gazette 2024/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.05.2023 CN 202310644083**

(71) Applicant: **Huawei Technologies Co., Ltd.**
**Shenzhen, Guangdong 518129 (CN)**

(72) Inventors:
- **KONG, Lingyu**
  **Shenzhen, Guangdong 518129 (CN)**
- **DAI, Xizeng**
  **Shenzhen, Guangdong 518129 (CN)**
- **LI, Ke**
  **Shenzhen, Guangdong 518129 (CN)**
- **LI, Xiang**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND APPARATUS**

(57) This application provides a communication method and apparatus, and relates to the communication field. A terminal device can send uplink information on a plurality of mutually independent transmit chains Txs. Because the plurality of Txs are independent of each other, output back-off OBOs of the plurality of Txs are not related to each other. Therefore, the terminal device may separately perform power back-off on each Tx based on an OBO of each Tx, and does not need to consider an OBO of another Tx. This can avoid a case in which powers of the Txs are reduced when the OBOs of the plurality of Txs are different. The method includes: The terminal device sends capability information, where the capability information indicates that the terminal device supports FSTD of the plurality of mutually independent Txs; receives first information, where the first information indicates an uplink resource, the uplink resource includes a plurality of resource sets, and the plurality of resource sets respectively correspond to the plurality of Txs; and sends uplink information on the plurality of resource sets.

| Terminal device | | Network device |
| --- | --- | --- |
| | S801: Capability information, where the capability information indicates that the terminal device supports frequency switched transmit diversity FSTD of a plurality of mutually independent transmit chains Tx | |
| | S802: First information, where the first information indicates an uplink resource, the uplink resource includes a plurality of resource sets, and the plurality of resource sets respectively correspond to the plurality of Txs | |
| | S803: Send uplink information on the plurality of resource sets | |

FIG. 8

**Description**

This application claims priority to Chinese Patent Application No. 202310644083.7, filed with the China National Intellectual Property Administration on May 31, 2023 and entitled "COMMUNICATION METHOD AND APPARATUS", which is incorporated herein by reference in its entirety.

**TECHNICAL FIELD**

Embodiments of this application relate to the communication field, and in particular, to a communication method and apparatus.

**BACKGROUND**

Uplink experience of users deteriorates due to a limited transmit power on a terminal side (for example, user equipment (user equipment, UE)). To resolve this problem, the terminal side uses a frequency switched transmit diversity (frequency switched transmit diversity, FSTD) technology to send uplink information in parallel on two transmit chains (transmit chain, Tx), to increase the transmit power on the terminal side. A part of the uplink information is sent on each Tx. After receiving parts of the uplink information from the two Txs, a network side combines the two parts of the uplink information to obtain the complete uplink information.

In the FSTD technology, the terminal side allocates, in a comb distribution manner or a segmented distribution manner, a frequency domain resource for the part of the uplink information sent on each Tx. A group of contiguous subcarriers (sub-carrier) is used as an example. In the comb distribution manner, a frequency domain resource corresponding to one Tx is a subcarrier whose sequence number is an odd number, and a frequency domain resource corresponding to the other Tx is a subcarrier whose sequence number is an even number. In the segmented distribution manner, if sequence numbers of a group of contiguous subcarriers are 0 to N-1, frequency domain resources corresponding to one Tx are subcarriers whose sequence numbers are 0 to $\frac{N}{2} - 1$, and frequency domain resources corresponding to the other Tx are subcarriers whose sequence numbers are $\frac{N}{2}$ to N-1.

However, in the current FSTD technology, regardless of whether output back-offs (output back-off, OBO) of a plurality of Txs are the same, each Tx needs to apply a same back-off power. Therefore, when the OBOs of the plurality of Txs are different, powers of the Txs are reduced.

**SUMMARY**

Embodiments of this application provide a communication method and apparatus, to resolve a problem that a power of a transmit chain Tx is reduced.

According to a first aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. The method includes: sending capability information, where the capability information indicates that the terminal device supports FSTD of a plurality of mutually independent Txs; receiving first information, where the first information indicates an uplink resource, the uplink resource includes a plurality of resource sets, and the plurality of resource sets respectively correspond to the plurality of Txs; and sending uplink information on the plurality of resource sets.

Based on this solution, the terminal device can support the FSTD of the plurality of mutually independent Txs. Because the plurality of Txs are independent of each other, output back-offs OBOs of the plurality of Txs are not related to each other. Therefore, the terminal device may separately perform power back-off on each Tx based on an OBO of each Tx, and does not need to consider an OBO of another Tx. This can avoid a case in which powers of the Txs are reduced when the OBOs of the plurality of Txs are different.

In addition, in an FSTD technology, the terminal device can support parallel transmission on a plurality of Txs. For example, a quantity of the plurality of Txs may be 2, 3, 4, or the like.

In a possible design, a quantity of the plurality of Txs is 2 or 4, and powers of the plurality of Txs are the same.

In a possible design, before receiving the first information, the communication method further includes: sending second information, where the second information indicates the quantity of the plurality of Txs and/or a power of each of the plurality of Txs.

In a possible design, before sending the uplink information on the plurality of resource sets, the communication method further includes: determining the plurality of resource sets from the uplink resource.

Based on this possible design, the uplink resource includes the plurality of resource sets, that is, the plurality of resource sets are different from each other. In other words, each resource set corresponds to a different frequency domain position, and each resource set is less than the uplink resource. Therefore, a bandwidth of the resource set is less than a bandwidth of the uplink resource. In addition, because the bandwidth is positively correlated with a value of the OBO, sending the uplink resource on the plurality of resource sets can reduce an output back-off OBO value of each Tx.

In a possible design, determining the plurality of resource sets from the uplink resource includes: determining the plurality of resource sets from the uplink resource based on the powers of the plurality of Txs.

In a possible design, determining the plurality of resource sets from the uplink resource based on the powers of the plurality of Txs includes: determining the plurality of resource sets from the uplink resource based on a first proportion, where the first proportion is a proportion of a power of a Tx corresponding to each resource set to a sum of the powers of the plurality of Txs.

Based on this possible design, the terminal device may determine the plurality of resource sets from the uplink resource based on a first proportion of each Tx, so that a capability of a radio frequency component in each Tx is fully released, thereby improving uplink transmission performance.

In a possible design, a proportion of the uplink resource occupied by each of the plurality of resource sets is equal to a first proportion corresponding to each resource set.

In a possible design, a proportion of the uplink resource occupied by each of M resource sets in the plurality of resource sets is less than a first proportion corresponding to each of the M resource sets, a proportion of the uplink resource occupied by each of N resource sets in the plurality of resource sets is greater than a first proportion corresponding to each of the N resource sets, a sum of M and N is equal to the quantity of the plurality of Txs, and M and N are positive integers.

In a possible design, the first information includes first indication information, and the first indication information indicates a relationship between sizes of the plurality of resource sets.

In a possible design, the first information includes information that separately indicates the plurality of resource sets.

In a possible design, before receiving the first information, the communication method further includes: receiving third information, where the third information is used to activate the FSTD.

According to a second aspect, a communication method is provided. The method may be performed by a network device, or may be performed by a component of the network device, for example, a processor, a chip, or a chip system of the network device, or may be implemented by a logical module or software that can implement all or some functions of the network device. The method includes: receiving capability information, where the capability information indicates that a terminal device supports FSTD of a plurality of mutually independent Txs; sending first information, where the first information indicates an uplink resource, the uplink resource includes a plurality of resource sets, and the plurality of resource sets respectively correspond to the plurality of Txs; and receiving uplink information on the plurality of resource sets.

Based on this solution, the network device can receive the uplink information on the plurality of mutually independent Txs. Because the plurality of Txs are independent of each other, OBOs of the plurality of Txs are not related to each other. Therefore, the network device may perform an operation on each Tx without considering a status of another Tx. For example, the network device may process a resource set of each Tx based on a power of each Tx, and does not need to process the resource set of each Tx based on a same power. This reduces correlation between the plurality of Txs and reduces mutual impact between the plurality of Txs.

In a possible design, a quantity of the plurality of Txs is 2 or 4, and powers of the plurality of Txs are the same.

In a possible design, before sending the first information, the communication method further includes: receiving second information, where the second information indicates the quantity of the plurality of Txs and/or a power of each of the plurality of Txs.

In a possible design, before sending the first information, the communication method further includes: determining the plurality of resource sets from the uplink resource.

In a possible design, determining the plurality of resource sets from the uplink resource includes: determining the plurality of resource sets from the uplink resource based on the powers of the plurality of Txs.

In a possible design, determining the plurality of resource sets from the uplink resource based on the powers of the plurality of Txs includes: determining the plurality of resource sets from the uplink resource based on a first proportion, where the first proportion is a proportion of a power of a Tx corresponding to each resource set to a sum of the powers of the plurality of Txs.

In a possible design, a proportion of the uplink resource occupied by each of the plurality of resource sets is equal to a first proportion corresponding to each resource set.

In a possible design, a proportion of the uplink resource occupied by each of M resource sets in the plurality of resource sets is less than a first proportion corresponding to each of the M resource sets, a proportion of the uplink resource occupied by each of N resource sets in the plurality of resource sets is greater than a first proportion corresponding to each of the N resource sets, a sum of M and N is equal to the quantity of the plurality of Txs, and M and N are positive integers.

In a possible design, the first information includes first indication information, and the first indication information indicates a relationship between sizes of the plurality of resource sets.

In a possible design, before sending the first information, the communication method further includes: receiving a plurality of reference signals, where the plurality of reference signals respectively correspond to the plurality of Txs; and determining the plurality of resource sets based on the plurality of reference signals.

In a possible design, the first information includes information that separately indicates the plurality of resource sets.

In a possible design, before sending the first information, the communication method further includes: sending third information, where the third information is used to activate the FSTD.

In a possible design, receiving the uplink information on the plurality of resource sets includes: separately performing channel estimation, equalization, demodulation, and joint decoding on the plurality of resource sets, to obtain the uplink information.

For technical effect brought by any possible design of the second aspect, refer to technical effect brought by a corresponding design of the first aspect. Details are not described herein again.

According to a third aspect, a communication apparatus is provided, configured to implement various methods. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions, and when the processor executes the instructions, the communication apparatus is enabled to perform the method according to any one of the aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a fifth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a sixth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the sixth aspect is a chip, a sending action/function of the communication apparatus may be understood as outputting information, and a receiving action/function of the communication apparatus may be understood as inputting information.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

According to a ninth aspect, a chip is provided, including a processor. The processor is coupled to a memory, the memory is configured to store a program or instructions, and when the program or the instructions are executed by the processor, the chip is enabled to perform the method according to any one of the foregoing aspects.

According to a tenth aspect, a system is provided, including the terminal device provided in any one of the third aspect to the sixth aspect or the apparatus included in the terminal device, and the network device provided in any one of the third aspect to the sixth aspect or the apparatus included in the network device.

For technical effect brought by any design manner in the third aspect to the tenth aspect, refer to technical effect brought by different design manners in the first aspect or the second aspect. Details are not described herein again.

**BRIEF DESCRIPTION OF DRAWINGS**

FIG. 1 is a diagram of distribution of resource blocks RBs in a bandwidth according to this application;

FIG. 2 is a diagram of a cyclic delay diversity CDD technology according to this application;

FIG. 3 is a curve diagram of a demodulation signal-to-noise ratio SNR threshold in a CDD technology according to this application;

FIG. 4 is another curve diagram of a demodulation SNR threshold in a CDD technology according to this application;

FIG. 5 is a diagram of a space frequency block coding SFBC technology according to this application;

FIG. 6(a) and FIG. 6(b) are a diagram of an FSTD technology according to this application;

FIG. 7 is a diagram of an architecture of a mobile communication system to which embodiments of this application are applied;

FIG. 8 is a schematic flowchart of a communication method according to this application;

FIG. 9 is a schematic flowchart of another communication method according to this application;

FIG. 10 is a schematic flowchart of still another communication method according to this application;

FIG. 11 is a diagram of resource set allocation according to this application;

FIG. 12 is a curve diagram of a demodulation SNR threshold in an FSTD technology according to this application;

FIG. 13 is another curve diagram of a demodulation SNR threshold in an FSTD technology according to this application;

FIG. 14 is a diagram of a structure of a communication apparatus according to this application;

FIG. 15 is a diagram of a structure of another communication apparatus according to this application; and

FIG. 16 is a diagram of a structure of still another communication apparatus according to this application.

**DESCRIPTION OF EMBODIMENTS**

In the descriptions of this application, unless otherwise specified, the character "/" indicates that an "or" relationship between associated objects. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or purposes. A person skilled in the art may understand that the words "first" and "second" do not limit a quantity and an execution sequence, and the words "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" are intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatuses provided in embodiments of this application may also correspondingly implement these features or functions. Details are not described herein.

It may be understood that, in this application, "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by specific information is referred to as to-be-indicated information. In a specific implementation process, the to-be-indicated information may be indicated in a plurality of manners, for example, but not limited to, the to-be-indicated information may be directly indicated, for example, by using the to-be-indicated information itself or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of a plurality of pieces of information that is pre-agreed upon (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities or sending occasions of the sub-information may be the same or different. A specific sending method is not limited in this application. The sending periodicities or the sending occasions of the sub-information may be predefined, for example, predefined according to a protocol, or may be configured by a transmit-end device by sending configuration information to a receive-end device.

In this application, unless otherwise specified, for same or similar parts of embodiments, refer to each other. In embodiments of this application, unless otherwise specified or a logical conflict occurs, terms and/or descriptions in different embodiments are consistent and may be mutually referenced, and different embodiments may be combined based on internal logical relationships between the embodiments to form a new embodiment. The following implementations of this application are not intended to limit the protection scope of this application.

For ease of understanding of the technical solutions in embodiments of this application, the following first briefly describes technologies related to this application.

1. Radio frequency front end (radio frequency front-end, RFFE)

The RFFE is a core component of a wireless communication module. The RFFE is configured to perform mutual conversion between a binary signal and a radio electromagnetic wave signal in a signal transmission process and a signal reception process. For example, the RFFE converts a binary signal into a high-frequency radio electromagnetic wave signal in the signal transmission process, and converts a received radio electromagnetic wave signal into a binary signal in the signal reception process.

The RFFE may be classified based on functions into a transmit chain (transmit chain, Tx) and a receive chain (receive chain, Rx).

The RFFE may be classified based on used radio frequency components into a power amplifier (power amplifier, PA), a filter, a digital-to-analog converter, a low noise amplifier, an antenna, and the like. The PA is configured to amplify a radio frequency signal of the Tx, the filter is configured to filter a signal of the Tx or the Rx, the digital-to-analog converter is configured to convert a binary signal of the Tx into a high-frequency radio electromagnetic wave signal, the low noise amplifier is configured to amplify a signal of the Rx and reduce noise, and the antenna is configured to transmit or receive a signal through the Tx or the Rx.

Therefore, the Tx may include the PA, the filter, the digital-to-analog converter, the antenna, and the like.

2. Output back-off (output back-off, OBO)

The OBO is an important factor that affects a transmit power. When a power input by a PA reaches a saturation region of a working region, third-order intermodulation is generated, causing an increase in an adjacent channel leakage power ratio (adjacent channel leakage ratio, ACLR) and an error vector magnitude (error vector magnitude, EVM). Consequently, user equipment (user equipment, UE) cannot pass a radio frequency test, that is, the UE cannot transmit a radio frequency signal normally. Therefore, power back-off needs to be performed, so that the power input by the PA reaches a linear working region. In this way, the UE can pass the radio frequency test, and further normally transmit the radio frequency signal.

The OBO is related to a resource block (resource block, RB) transmitted in frequency domain and a quantity of RBs. A bandwidth may be divided into three parts: an edge RB allocation (edge RB allocations), an outer RB allocation (outer RB allocations), and an inner RB allocation (inner RB allocations). Edge RB allocations are positions of 2 RBs on outermost sides of the bandwidth. The outer RB allocation and the inner RB allocation are relative. When quantities of contiguous RBs sent within the bandwidth vary, and distribution of the outer RB allocation and the inner RB allocation in the bandwidth varies. For example, a larger quantity of contiguous RBs sent within the bandwidth indicates a larger quantity of outer RB allocations in the bandwidth. In other words, a larger quantity of contiguous RBs indicates a higher probability of sending contiguous RBs at outer RB allocations.

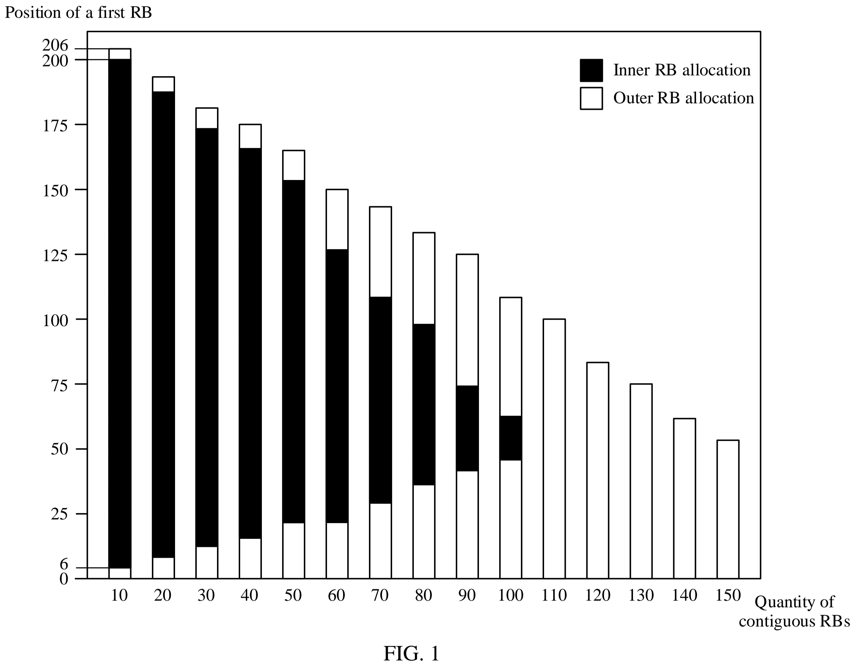

For example, in a system bandwidth of 40 megahertz (mega Hertz, MHz), a transmission bandwidth is 216 RBs, and positions of RBs whose indexes are 214 and 215 are edge RB allocations. FIG. 1 shows an optional range of a position of a first RB in contiguous RBs when quantities of contiguous RBs are different. Further, FIG. 1 may also represent distribution of outer RB allocations and inner RB allocations in a bandwidth under different quantities of contiguous RBs. For example, when there are 10 contiguous RBs, because edge RB allocations indicate positions of two outermost RBs in the bandwidth, the edge RB allocations in the bandwidth (for example, indexes of 216 RBs in the bandwidth are 0 to 215) are positions of RBs whose indexes are 214 and 215. As shown in FIG. 1, inner RB allocations include positions of RBs whose indexes are 6 to 200, and outer RB allocations include positions of RBs whose indexes are 0 to 5 and 201 to 213. In addition, it can be learned from FIG. 1 that, when there are 10 contiguous RBs, a position of a first RB in the contiguous RBs may be a position of any one of RBs whose indexes are 0 to 206. For example, the position of the first RB may be a position of an RB whose index is 0, and in this case, positions of the contiguous RBs include positions of RBs whose indexes are 0 to 9. Alternatively, the position of the first RB may be a position of an RB whose index is 206, and in this case, positions of the contiguous RBs include positions of RBs whose indexes are 206 to 215. Alternatively, the position of the first RB may be a position of an RB whose index is 100, and in this case, positions of the contiguous RBs include positions of RBs whose indexes are 100 to 109. Similarly, when the quantity of contiguous RBs in FIG. 1 is another value, for an optional range of a position of a first RB and distribution of outer RB allocations and inner RB allocations in the bandwidth, refer to related descriptions in the foregoing case of 10 contiguous RBs. Details are not described herein again in this application. The bandwidth is negatively correlated with a power. Therefore, a larger quantity of sent contiguous RBs indicates a wider bandwidth, and requires a lower power and a larger OBO.

3. Component carrier (component carrier, CC)

A carrier corresponds to a cell. For example, that a terminal device accesses one carrier may be understood as that the terminal device accesses one cell. A communication bandwidth of a cell is a bandwidth of a carrier corresponding to the cell. A carrier of each cell may be referred to as a CC.

4. Frequency domain resource

A subcarrier (sub-carrier) is a minimum resource in frequency domain, and a subcarrier resource may be flexibly configured.

In an NR system, an RB occupies 12 subcarriers in frequency domain, and a resource block group (resource block group, RBG) represents a group of contiguous RBs.

There are two types of frequency domain resource allocation: a type (type) 0 and a type 1. In the type 0, a base station allocates a frequency domain resource at a granularity of an RBG. A frequency domain resource allocated to UE is indicated through a bitmap (bitmap), and each RBG corresponds to 1 bit in the bitmap. The type 0 supports both contiguous resource allocation and non-contiguous resource allocation. In the type 1, the base station indicates, through a resource indication value (resource indication value, RIV), a frequency domain resource allocated to the UE, that is, the frequency domain resource is indicated by using a start position of an RB and a quantity of RBs. The type 1 supports contiguous resource allocation.

5. Transmit diversity (transmission diversity, TxD)

The TxD indicates that a plurality of radio frequency components perform transmission in parallel, to increase a transmit power. The TxD is a technology that effectively prevents fading and improves reliability in areas with poor uplink coverage (for example, at a cell edge). This is mainly implemented by using a property that signals in different dimensions in a radio propagation environment are independent of each other or approximately independent of each other. That signals are independent of each other or approximately independent of each other means that the signals in different dimensions are not related to each other or do not affect each other. That is, a signal in each dimension is not affected by a signal in another dimension, and exists as an independent individual. For example, a fading degree of a signal in a dimension is large, which does not affect a signal in another dimension. A fading degree of the signal in the another dimension is related only to a signal channel. Therefore, the fading degree of the signal in the another dimension may be small or large.

Currently, power classes (power class, PC) of transmit powers defined in the protocol include a PC3, a PC2, a PC1.5, and a PC1. A power corresponding to the PC3 is 23 decibelmilliwatts (decibel relative to one milliwatt, dBm), a transmit power corresponding to the PC2 is 26 dBm, a transmit power corresponding to the PC1.5 is 29 dBm, and a transmit power corresponding to the PC1 is 31 dBm. The PC is positively correlated with a transmit power.

A power of parallel transmission of two lower-level radio frequency components is equal to a transmit power of a higher-level transmit component. For example, a power of parallel transmission of two PC3 radio frequency components is equal to a transmit power of one PC2 radio frequency component. That is, a power ratio between 23 dBm and 26 dBm is 1:2, a power ratio between 26 dBm and 29 dBm is 1:2, a power ratio between 29 dBm and 31 dBm is 1:2, a power ratio between 23 dBm and 29 dBm is 1:4, a power ratio between 23 dBm and 31 dBm is 1:6, and a power ratio between 26 dBm and 31 dBm is 1:4.

In a scenario in which a terminal device accesses a single CC, TxD is usually implemented by using a cyclic delay diversity (cyclic delay diversity, CDD) technology, a space frequency block coding (space frequency block coding, SFBC) technology, and a frequency switched transmit diversity (frequency switched transmit diversity, FSTD) technology.

In a first possible implementation, TxD is implemented by using the CDD technology.

The CDD technology is a phase diversity technology. To be specific, cyclic shift is performed on a to-be-sent signal based on different delays, and phase shift in frequency domain is implemented through a delay in time domain, to achieve diversity. Each Tx corresponds to one delay. In other words, a signal sent by each Tx is a signal obtained by performing cyclic shift on a to-be-sent signal based on a delay corresponding to the Tx.

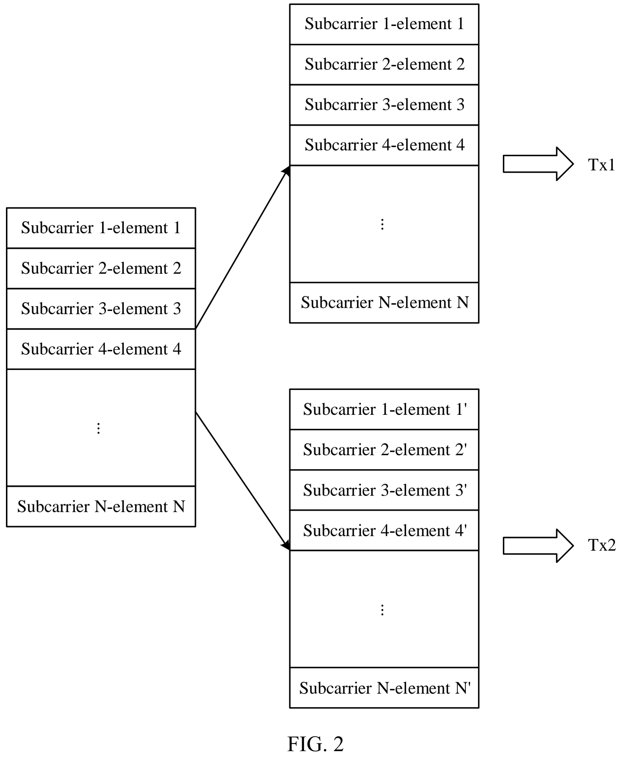

For example, the to-be-sent signal includes N code elements, and one code element is carried on one subcarrier, that is, resources carrying the to-be-sent signal are subcarriers 1 to N. As shown in FIG. 2, there are two Txs. Therefore, a signal carried on N subcarriers sent on one of the two Txs is code elements 1 to N, that is, the signal sent on one Tx is the to-be-sent signal; and a signal carried on N subcarriers sent by the other Tx is code elements 1' to N'. An code element I' is an code element obtained by performing cyclic shift on an code element 1; and similarly, an code element N' is an code element obtained by performing cyclic shift on the code element N, that is, a signal sent by the other Tx is a cyclic shifted signal, where N is a positive integer greater than 0.

However, a delay value of the cyclic shift is related to a channel estimation result. Therefore, when an error occurs in channel estimation, a demodulation signal-to-noise ratio (signal-to-noise ratio, SNR) threshold of the CDD technology fluctuates, resulting in unstable CDD performance. Alternatively, a demodulation SNR threshold is high. Consequently, CDD performance is deteriorated, and uplink experience is affected.

For example, a demodulation SNR threshold of the CDD technology on a low-correlation channel fluctuates, resulting in unstable CDD performance; and a demodulation SNR threshold of the CDD technology on a high-correlation channel is high, resulting in deteriorated CDD performance.

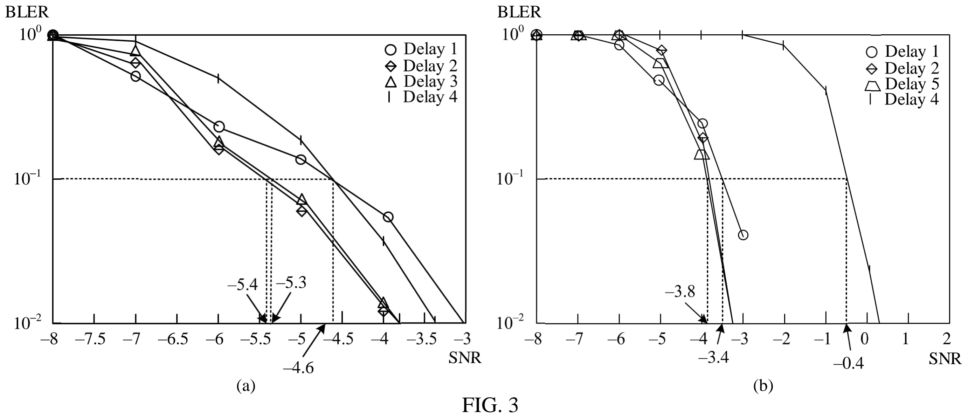

FIG. 3 shows curves of demodulation SNR thresholds of different cyclic shifts (namely, different delays) on low-correlation channels. In FIG. 3, a vertical axis is a block error rate (black error rate, BLER), and a horizontal axis is a demodulation SNR threshold (unit: decibel (decibel, dB)). A channel bandwidth (channel bandwidth, CBW) of a low-correlation channel is 30 MHz, a subcarrier spacing (sub-carrier space, SCS) is 30 kilohertz (kilo Hertz, kHZ), and a channel model is a tapped delay line (tapped delay line, TDL) model C300-10.

In (a) in FIG. 3, two Txs and four Rxs (that is, 2T4R) are used as an example. In the figure, a delay 1 is 0 nanoseconds (nanosecond, ns), a delay 2 is 2 ns, a delay 3 is 200 ns, and a delay 4 is 2000 ns. For example, a BLER is $10^{-1}$. It can be seen from (a) in FIG. 3 that, when a delay is 0 ns (that is, the delay 1) and the delay 4, demodulation SNR thresholds are -4.6 dB, and the demodulation SNR thresholds of the delay 1 and the delay 4 are the largest. In this case, a demodulation SNR threshold of the delay 2 is -5.4 dB, and a demodulation SNR threshold of the delay 3 is -5.3 dB, that is, the demodulation SNR threshold of the delay 2 is the lowest. Therefore, in a delay interval of 0 ns to 2000 ns, when the BLER is $10^{-1}$, a maximum fluctuation range of the demodulation SNR threshold is 0.8 dB.

In (b) in FIG. 3, two Txs and eight Rxs (that is, 2T8R) are used as an example. In the figure, a delay 1 is 0 ns, a delay 2 is 2 ns, a delay 5 is 20 ns, and a delay 4 is 2000 ns. For example, a BLER is $10^{-1}$. It can be seen from (b) in FIG. 3 that, when a delay is 0 ns (that is, the delay 1), a demodulation SNR threshold is -3.4 dB. In this case, a demodulation SNR threshold of the delay 4 is the largest, and is -0.4 dB, that is, a fluctuation range of the demodulation SNR threshold between the delay 1 and the delay 4 is 3 dB. A minimum value in demodulation SNR thresholds of the delay 2 and the delay 5 is -3.8 dB, that is, a fluctuation range of the demodulation SNR threshold between the delay 1 and the delay 2 and a fluctuation range of the demodulation SNR threshold between the delay 1 and the delay 5 are 0.4 dB. Therefore, in a delay interval of 0 ns to 2000 ns, when the BLER is $10^{-1}$, a maximum fluctuation range of the demodulation SNR threshold is 3 dB.

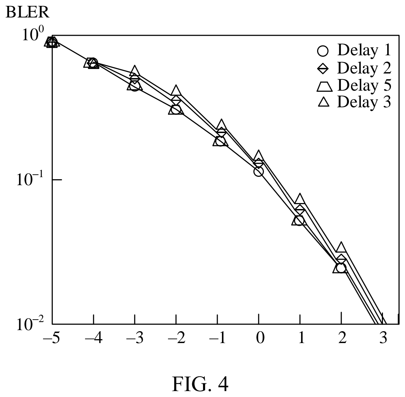

FIG. 4 is a curve of demodulation SNR thresholds of different cyclic shifts (namely, different delays) on a high-correlation channel. In FIG. 4, a vertical axis is a BLER, and a horizontal axis is a demodulation SNR threshold (unit: dB). A CBW of the high-correlation channel is 20 MHz, an SCS is 30 kHz, and a channel model is TDL C300-10.

In FIG. 4, two Txs and two Rxs (that is, 2T2R) are used as an example. In the figure, a delay 1 is 0 ns, a delay 2 is 2 ns, a delay 3 is 200 ns, and a delay 5 is 20 ns. It can be learned from FIG. 4 that demodulation SNR thresholds of different delays fluctuate slightly and are stable. However, compared with a low-correlation channel, a demodulation SNR threshold of a high-correlation channel is large, resulting in deteriorated CDD performance. Therefore, the CDD technology is not applicable to the high-correlation channel.

In a second possible implementation, TxD is implemented by using the SFBC technology.

The SFBC technology obtains space diversity and frequency diversity through space frequency coding (that is, a coding technology is introduced between an code element and each Tx). A to-be-sent signal includes a plurality of code elements, and one code element is carried on one subcarrier. In the SFBC technology, space frequency coding is performed in a unit of two code elements and two Txs.

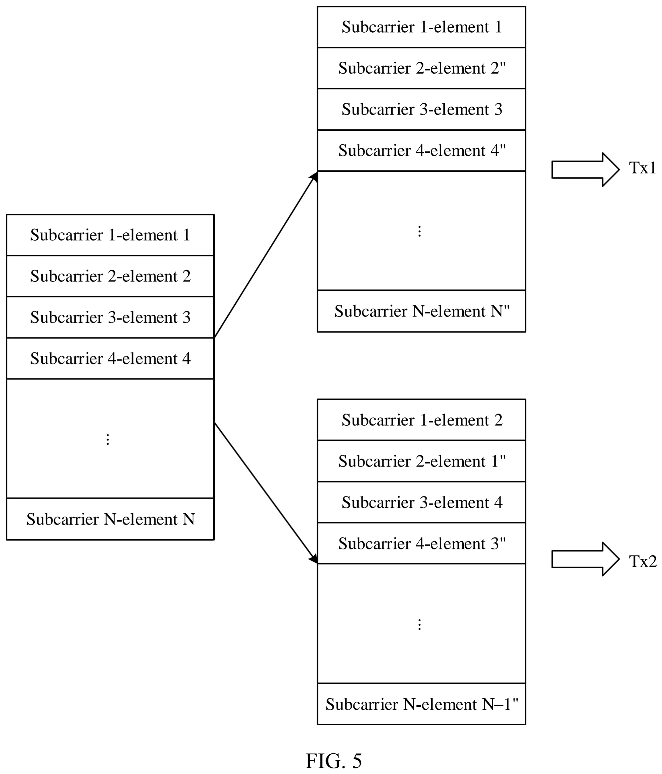

For example, the to-be-sent signal includes N code elements. As shown in FIG. 5, a signal carried on a first subcarrier of one Tx is an code element 1, and a signal carried on a first subcarrier of the other Tx is an code element 2; and a signal carried on a second subcarrier of one Tx is an code element 2", and a signal carried on a second subcarrier of the other Tx is an code element 1". The code element 2" is a value obtained by negating a conjugate value of the code element 2, and the code element 1" is a conjugate value of the code element 1. Similarly, code elements 3 to N are coded according to the foregoing coding technology of the code elements 1 and 2. Then, coded code elements are separately sent on the other Tx.

A receiver performs corresponding processing on the signals from a transmitter, that is, the receiver does not distinguish between the two Txs, and processes the signals from the two Txs by using a same power. Therefore, the two Txs at the transmitter need to send signals at a same power, to avoid a loss of a signal processed by the receiver. Therefore, when the two Txs at the transmitter generate different OBOs, a larger OBO needs to be used as a final OBO of the two Txs, to ensure that powers of the two Txs at the transmitter are the same. As a result, a power of a Tx corresponding to a smaller OBO decreases.

In a third possible implementation, TxD is implemented by using the FSTD technology.

The FSTD is a frequency diversity technology. To be specific, signals sent on different Txs are carried on different subcarriers, to reduce correlation between subcarriers, so that an equivalent channel generates frequency selectivity, that is, different frequencies correspond to different Txs.

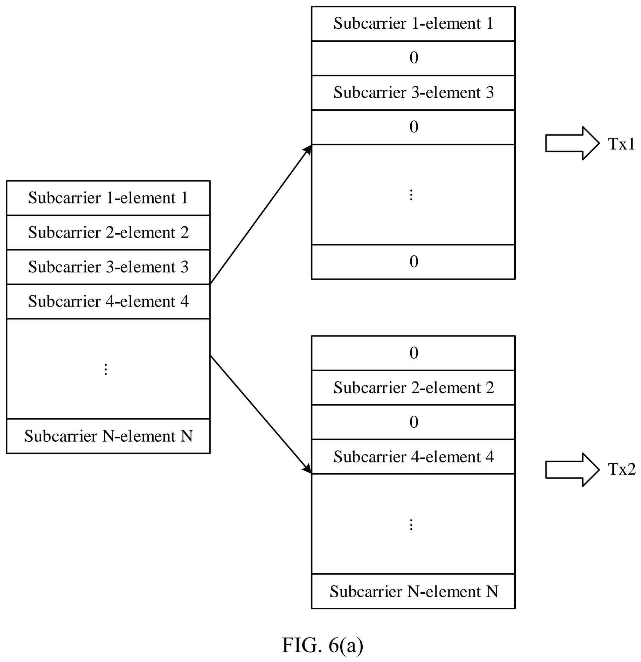

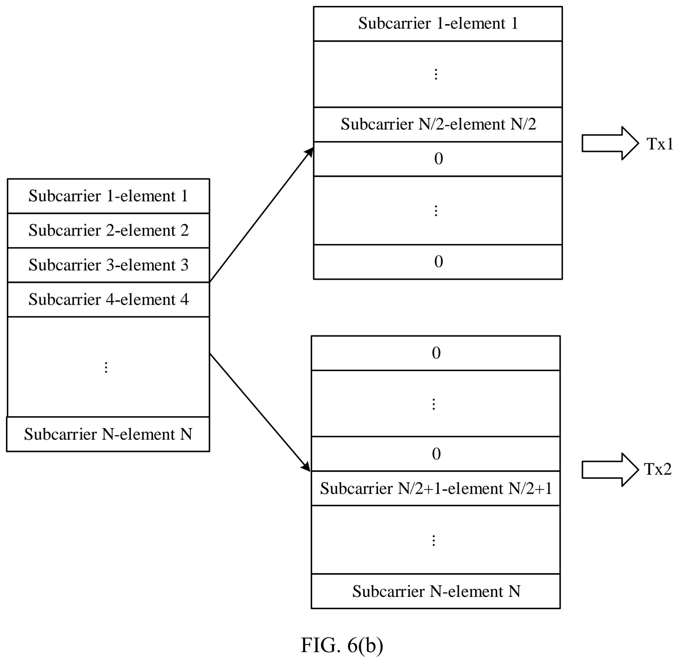

For example, the FSTD technology includes comb distribution and segmented distribution. For example, a to-be-sent signal includes N code elements, and one code element is carried on one subcarrier, that is, resources carrying the to-be-sent signal are subcarriers 1 to N. As shown in FIG. 6(a) and FIG. 6(b), there are two Txs, and a comb distribution manner is shown in FIG. 6(a). To be specific, one Tx sends a subcarrier whose index is an odd number in the N subcarriers, and the other Tx sends a subcarrier whose index is an even number in the N subcarriers. A segmented distribution manner is shown in FIG. 6(b). To be specific, one Tx sends half of the N subcarriers, and the other Tx sends subcarriers other than the half of the N subcarriers.

Similar to the foregoing SFBC technology, in the FSTD technology, a receiver performs corresponding processing on signals from a transmitter, that is, the receiver does not distinguish between the two Txs, and processes signals from the two Txs by using a same power. Therefore, the two Txs at the transmitter need to send signals at a same power, to avoid a loss of a signal processed by the receiver. Therefore, when OBOs of the two Txs at the transmitter are different, a larger OBO needs to be used as a final OBO of the two Txs, to ensure that powers of the two Txs at the transmitter are the same. As a result, a power of a Tx corresponding to a smaller OBO decreases.

In addition, a bandwidth occupied by a transmit signal of each Tx in the FSTD in the segmented distribution manner is N/2 subcarriers, and a bandwidth occupied by a transmit signal of each Tx in each of the FSTD in the comb distribution manner, the CDD technology, and the SFBC technology is N subcarriers. Therefore, compared with the FSTD in the segmented distribution manner, the FSTD in the comb distribution manner, the CDD technology, and the SFBC technology all have a larger OBO.

In view of this, this application provides a communication method, to resolve a problem that a power of a Tx is reduced.

The technical solutions provided in this application may be applied to various communication systems. The communication system may be a 4G LTE system, an LTE-advanced system (LTE-Advanced, LTE-A) system, a 5G NR system, a vehicle to everything (vehicle to everything, V2X) system, an LTE and NR hybrid networking system, a device-to-device (device-to-device, D2D) system, a machine-to-machine (machine to machine, M2M) communication system, an internet of things (internet of things, IoT), and another next-generation communication system, for example, a 6th generation (6th generation, 6G) communication system. Alternatively, the communication system may be a non-3GPP communication system. This is not limited.

The foregoing communication systems applicable to this application are merely examples for description, and the communication systems applicable to this application are not limited thereto. This is uniformly described herein, and details are not described below again.

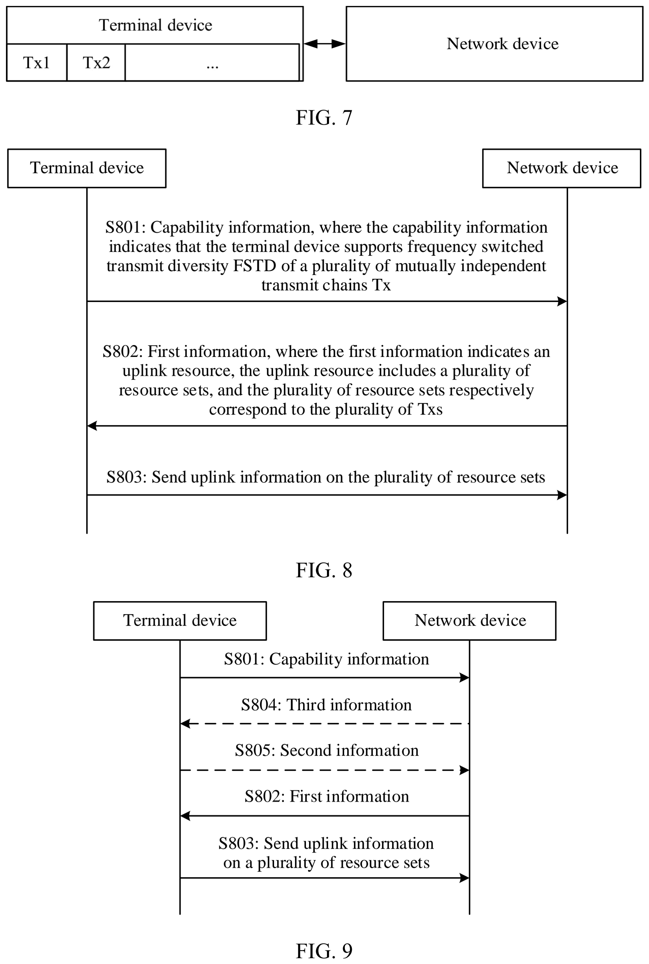

FIG. 7 shows an example of a communication system according to this application. The communication system includes a terminal device and a network device. The terminal device includes a plurality of Txs. The plurality of Txs are independent of each other.

Optionally, the network device in embodiments of this application is a device that connects the terminal device to a wireless network. The network device may be a node in a radio access network, and may also be referred to as a base station or a radio access network (radio access network, RAN) node.

For example, the network device may include an evolved NodeB (NodeB or eNB or e-NodeB, evolutional NodeB) in an LTE system or an LTE-A system, for example, a conventional macro base station eNB and a micro base station eNB in a heterogeneous network scenario. Alternatively, the network device may include a next generation NodeB (next generation NodeB, gNB) in an NR system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in a non-terrestrial communication network (non-terrestrial network, NTN), that is, may be deployed on a high-altitude platform or a satellite. In the NTN, the network device may serve as a layer 1 (L1) relay (relay), a base station, a DU, or an integrated access and backhaul (integrated access and backhaul, IAB) node. Alternatively, the network device may be a device that implements functions of a base station in the IoT, for example, a device that implements the functions of the base station in V2X, D2D, or machine-to-machine (machine to machine, M2M). This is not limited in embodiments of this application.

Optionally, a base station in embodiments of this application may include various forms of base stations, for example, a macro base station, a micro base station (or referred to as a small cell), a relay station, an access point, a home base station, a TRP, a transmission point (transmitting point, TP), or a mobile switching center. This is not specifically limited in embodiments of this application.

Optionally, the terminal device in embodiments of this application may be a user-side device configured to implement a wireless communication function, for example, a terminal or a chip that may be used in the terminal. The terminal may be user equipment (user equipment, UE), an access terminal, a terminal unit, a terminal station, a mobile station, a mobile console, a remote station, a remote terminal, a mobile device, a wireless communication device, a terminal agent, a terminal apparatus, or the like in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be movable or fixed.

The following describes in detail a cell reselection method provided in embodiments of this application with reference to the accompanying drawings. It may be understood that in embodiments of this application, the network device or the terminal device may perform some or all of the steps in embodiments of this application, and these steps or operations are merely examples. In embodiments of this application, another operation or various operation variations may further be performed. In addition, the steps may be performed in a sequence different from a sequence presented in embodiments of this application, and not all the operations in embodiments of this application may be performed.

FIG. 8 is a communication method according to this application. The communication method includes the following steps.

S801: A terminal device sends capability information to a network device. Correspondingly, the network device receives the capability information from the terminal device. The capability information indicates that the terminal device supports FSTD of a plurality of mutually independent Txs.

Further, PCs of the plurality of mutually independent Txs supported by the terminal device are the same or different. In other words, powers of the plurality of Txs are the same or different.

Optionally, the FSTD of the plurality of mutually independent Txs may also be referred to as enhanced FSTD, that is, the terminal device supports the enhanced FSTD. Alternatively, the FSTD of the plurality of mutually independent Txs may have other names. This is not limited in this embodiment of this application.

Optionally, that the plurality of Txs are independent of each other or the plurality of mutually independent Txs may be understood as that the plurality of Txs are not related to each other and do not affect each other. In other words, each Tx exists as an independent individual, and in a process in which the terminal device processes any one of the plurality of Txs, the terminal device needs to perform processing based on related data of the one Tx, and does not need to consider another Tx. A Tx1 and a Tx2 are used as an example. If an OBO of the Tx1 is 3 dBm, and an OBO of the Tx2 is 6 dBm, the Tx1 needs to be backed off by 3 dBm, and the Tx2 needs to be backed off by 6 dBm. Optionally, the capability information may be carried in radio resource control (radio resource control, RRC) signaling or media access control control element (media access control-control element, MAC-CE) signaling.

Step S802: The network device sends first information to the terminal device. Correspondingly, the terminal device receives the first information from the network device. The first information indicates an uplink resource, the uplink resource includes a plurality of resource sets, and the plurality of resource sets respectively correspond to the plurality of Txs. In other words, each Tx corresponds to one resource set.

It should be understood that the uplink resource may be a size of the uplink resource and a frequency domain position of the uplink resource. Similarly, the resource set may be a size of the resource set and a frequency domain position of the resource set.

Optionally, the resource set includes at least one RB, or the resource set includes at least one RBG. For example, when the uplink resource is a contiguous resource, the resource set includes at least one RB, or the resource set includes at least one RBG. In a type 1, the resource set includes at least one RB. In a type 0, the resource set includes at least one RBG. When the uplink resource is a non-contiguous resource, the resource set includes at least one RBG. In this case, a resource allocation manner is the type 0.

Optionally, before step S802, as shown in FIG. 9, the communication method further includes step S804.

Step S804: The network device sends third information to the terminal device. Correspondingly, the terminal device receives the third information from the network device. The third information is used to activate the FSTD (that is, the FSTD of the plurality of mutually independent Txs).

For example, after the terminal device reports, to the network device, that the terminal device can support the FSTD of the plurality of mutually independent Txs, the network device may deliver the third information based on the report of the terminal device, to activate a capability (the capability of supporting the FSTD of the plurality of mutually independent Txs), so that the terminal device can send uplink information through the mutually independent Txs.

Step S803: The terminal device sends the uplink information to the network device on the plurality of resource sets. Correspondingly, the network device receives the uplink information from the terminal device on the plurality of resource sets. For example, the uplink information includes a plurality of pieces of sub-information, and the plurality of pieces of sub-information respectively correspond to the plurality of pieces of Tx. In other words, each of the plurality of resource sets carries one piece of sub-information. The terminal device separately performs processing such as coding, modulation, and the like on each piece of information, and sends, on a resource set of each piece of sub-information, the processed sub-information carried on the resource set of each piece of sub-information. Further, the network device receives, on each resource set, the sub-information carried on the resource set, to obtain the uplink information. In a process of sending each piece of sub-information, the terminal device performs power back-off on each Tx based on an OBO of each Tx, and further sends, based on a backed-off power of each Tx, the piece of sub-information corresponding to the Tx.

In other words, for the plurality of mutually independent Txs, when performing operations on the plurality of Txs, the terminal device performs an operation on each Tx as an independent individual, that is, when performing an operation on a Tx, the terminal device does not need to consider a status of another Tx. For example, the terminal device may separately perform processing such as coding, modulation, and the like on sub-information sent on a resource set of each Tx. The terminal device may further perform power back-off on each Tx based on an OBO of each Tx.

Optionally, that the network device receives the uplink information from the terminal device on the plurality of resource sets includes: The network device separately performs channel estimation, equalization, demodulation, and joint decoding on the plurality of resource sets, to obtain the uplink information.

For example, the uplink information includes a plurality of pieces of sub-information, the plurality of pieces of sub-information respectively correspond to the plurality of pieces of Tx, and each piece of sub-information includes at least one piece of fourth information (for example, a demodulation reference signal (demodulation reference signal, DMRS)). The fourth information is used for channel estimation. The network device performs, based on a plurality of pieces of fourth information, channel estimation on a channel of a Tx corresponding to each of the plurality of pieces of fourth information, to obtain a plurality of channel estimation results; performs equalization and demodulation, based on the plurality of channel estimation results, on sub-information corresponding to each of the plurality of channel estimation results, to obtain a plurality of pieces of fifth information; and then performs joint decoding on the plurality of pieces of fifth information, to obtain the uplink information.

According to the communication method provided in this application, the terminal device can support the FSTD of the plurality of mutually independent Txs. Because the plurality of Txs are independent of each other, OBOs of the plurality of Txs are not related to each other. For example, the terminal device may perform power back-off on each Tx based on an output back-off OBO of each Tx, and does not need to consider an OBO of another Tx. This avoids a case in which the powers of the Txs are reduced when the OBOs of the plurality of Txs are different. The network device may process a resource set of each Tx based on the power of each Tx, and does not need to process the resource set of each Tx based on a same power. This reduces correlation between the plurality of Txs and reduces mutual impact between the plurality of Txs.

In addition, in the FSTD technology, the terminal device can support parallel transmission on the plurality of Txs. For example, a quantity of the plurality of Txs may be 2, 3, 4, or the like.

The foregoing is an overall description of the method provided in this application. The following describes in detail the plurality of Txs mentioned in the foregoing embodiments.

Optionally, the network device may learn of the quantity of the plurality of Txs and a power of each of the plurality of Txs in the following two manners.

In a possible implementation, the terminal device reports the quantity of the plurality of Txs and/or the power of each Tx.

Optionally, before step S802, as shown in FIG. 9, the communication method may further include step S805.

Step S805: The terminal device sends second information to the network device. Correspondingly, the network device receives the second information from the terminal device. The second information indicates the quantity of the plurality of Txs and/or the power of each Tx.

In a first possible implementation, different values of the second information indicate the quantity of the plurality of Txs and/or the power of each Tx.

For example, the second information may indicate the quantity of the plurality of Txs and the power of each Tx. For example, the second information indicates "two Txs and 23 dBm+26 dBm". In this case, the quantity of the plurality of Txs is two, and powers of the plurality of Txs (for example, a Tx1 and a Tx2) are unequal. In addition, because a power ratio between 23 dBm and 26 dBm is 1:2, when a power of the Tx1 is 23 dBm and a power of the Tx2 is 26 dBm, a power ratio between the Tx1 and the Tx2 is 1:2. When the power of the Tx1 is 26 dBm and the power of the Tx2 is 23 dBm, the power ratio between the Tx1 and the Tx2 is 2:1.

Alternatively, the second information may indicate the quantity of the plurality of Txs. When the second information indicates the quantity of the plurality of Txs, powers of the plurality of Txs are equal. For example, the second information indicates "two Txs". In this case, powers of the plurality of Txs (for example, a Tx1 and a Tx2) are equal. That is, a power ratio between the Tx1 and the Tx2 is 1:1. Alternatively, the second information indicates "three Txs", that is, the quantity of the plurality of Txs is 3. In this case, powers of the plurality of Txs (for example, a Tx1, a Tx2, and a Tx3) are equal. That is, a power ratio among the Tx1, the Tx2, and the Tx3 is 1:1:1. Alternatively, the second information indicates "four Txs". In this case, powers of the plurality of Txs (for example, a Tx1, a Tx2, a Tx3, and a Tx4) are equal. That is, a power ratio among the Tx1, the Tx2, the Tx3, and the Tx4 is 1:1:1:1.

Alternatively, the second information may indicate the power of each Tx. For example, the second information indicates "23 dBm+23 dBm+26 dBm". In this case, there are three Txs, powers of two Txs in the plurality of Txs (for example, a Tx1, a Tx2, and a Tx3) are both 23 dBm, and a power of another Tx is 26 dBm. Therefore, when powers of the Tx1 and the Tx2 are both 23 dBm, and a power of the Tx3 is 26 dBm, a power ratio among the Tx1, the Tx2, and the Tx3 may be 1:1:2. When powers of the Tx1 and the Tx3 are both 23 dBm, and a power of the Tx2 is 26 dBm, a power ratio among the Tx1, the Tx2, and the Tx3 may be 1:2:1. When powers of the Tx2 and the Tx3 are both 23 dBm, and a power of the Tx1 is 26 dBm, a power ratio among the Tx1, the Tx2, and the Tx3 may be 2:1:1.

Optionally, the second information may indicate the power of each Tx through a power class. For example, the second information indicates "PC3+PC2", that is, the quantity of the plurality of Txs is 2, a power of one of the plurality of Txs (for example, a Tx1 and a Tx2) is 26 dBm, and a power of the other Tx is 23 dBm. Therefore, when the power of the Tx1 is 26 dBm, and the power of the Tx2 is 23 dBm, a power ratio between the Tx1 and the Tx2 is 2:1. When the power of the Tx1 is 23 dBm, and the power of the Tx2 is 26 dBm, a power ratio between the Tx1 and the Tx2 is 1:2.

In a second possible implementation, the power of each Tx is indicated by using a field carrying the second information.

For example, when the second information is carried in a ul-FullPwrMode-R16 field, it indicates that the powers of the plurality of Txs are all 26 dBm, that is, power classes of the plurality of Txs are all PC2. When the second information is carried in a ul-FullPwrModel-R16 field, it indicates that the powers of the plurality of Txs are all 23 dBm, that is, power classes of the plurality of Txs are all PC3.

Optionally, indicating the power of each Tx by using the field carrying the second information includes: indicating the powers of the plurality of Txs by using the field carrying the second information and based on different values of the second information.

For example, when the second information is carried in a ul-FullPwrMode2-TPMIGroup-r16 field, it indicates that a power of at least one of the plurality of Txs is 26 dBm, and the power of the at least one Tx is 23 dBm. In this case, the power of each Tx further needs to be determined based on a value of the second information.

In an example, when the quantity of the plurality of Txs is 2, the second information may be represented by using 1 bit. When a value of the 1 bit is 1, it indicates that a power of a Tx1 in two Txs (for example, the Tx1 and a Tx2) is 26 dBm, and a power of the Tx2 is 23 dBm. When the value of the 1 bit is 0, it indicates that the power of the Tx1 is 23 dBm, and the power of the Tx2 is 26 dBm. Alternatively, when the value of the 1 bit is 1, it indicates that the power of the Tx1 is 23 dBm, and the power of the Tx2 is 26 dBm. When the value of the 1 bit is 0, it indicates that the power of the Tx1 is 26 dBm, and the power of the Tx2 is 23 dBm.

In another example, the second information may be represented by using a bitmap (bitmap).

For example, the quantity of the plurality of Txs (for example, a Tx1 and a Tx2) is 2, and each bit in the bitmap corresponds to one Tx. In this case, the bitmap includes 2 bits. When the bitmap is 10, the second information indicates that a power of the Tx1 is 26 dBm, and a power of the Tx2 is 23 dBm. When the bitmap is 01, the second information indicates that the power of the Tx1 is 23 dBm, and the power of the Tx2 is 26 dBm.

For example, the quantity of the plurality of Txs (for example, a Tx1, a Tx2, a Tx3, and a Tx4) is 4, and each bit in the bitmap corresponds to one Tx. In this case, the bitmap includes 4 bits. When the bitmap is 1000, the second information indicates that a power of the Tx1 is 26 dBm, and powers of the Tx2, the Tx3, and the Tx4 are all 23 dBm. When the bitmap is 0100, the second information indicates that powers of the Tx1, the Tx3, and the Tx4 are all 23 dBm, and a power of the Tx2 is 26 dBm. When the bitmap is 0010, the second information indicates that powers of the Tx1, the Tx2, and the Tx4 are all 23 dBm, and a power of the Tx3 is 26 dBm. When the bitmap is 0001, the second information indicates that powers of the Tx1, the Tx2, and the Tx3 are all 23 dBm, and a power of the Tx4 is 26 dBm. When the bitmap is 1100, the second information indicates that powers of the Tx1 and the Tx2 are both 26 dBm, and powers of the Tx3 and the Tx4 are both 23 dBm. When the bitmap is 0110, the second information indicates that powers of the Tx2 and the Tx3 are both 26 dBm, and powers of the Tx1 and the Tx4 are both 23 dBm. When the bitmap is 0011, the second information indicates that powers of the Tx3 and the Tx4 are both 26 dBm, and powers of the Tx1 and the Tx2 are both 23 dBm. When the bitmap is 1110, the second information indicates that powers of the Tx1, the Tx2, and the Tx3 are all 26 dBm, and powers of the Tx3 and the Tx4 are all 23 dBm. When the bitmap is 0111, the second information indicates that powers of the Tx2, the Tx3, and the Tx4 are all 26 dBm, and a power of the Tx1 is 23 dBm.

In still another example, the second information may be represented by using a transmitted precoding matrix indicator (transmitted precoding matrix indicator, TPMI).

For example, the quantity of the plurality of Txs (for example, a Tx1 and a Tx2) is 2. When a TPMI index is 0, the second information indicates that a power of the Tx1 is 26 dBm, and a power of the Tx2 is 23 dBm. When the TPMI index is 1, the second information indicates that the power of the Tx1 is 23 dBm, and the power of the Tx2 is 26 dBm. Optionally, in this possible implementation, the quantity of the plurality of Txs is predefined. For example, the quantity of the plurality of Txs may be predefined as 2 or 4.

Optionally, the quantity of the plurality of Txs is predefined based on a device type of the terminal device.

For example, when the terminal device is a handheld device (for example, UE or a wearable device), a predefined quantity of the plurality of Txs is 2; or when the terminal device is a fixed device (for example, a terminal station, a mobile station, a mobile console, a remote station, or a WLL station), a predefined quantity of the plurality of Txs is 4.

It should be noted that step S805 may be performed after step S801, or step S805 and step S801 may be simultaneously performed. For example, both the capability information and the second information are carried in RRC signaling or MAC-CE signaling. This is not limited in this embodiment of this application.

In another possible implementation, the quantity of the plurality of Txs and the power of each Tx are predefined.

Optionally, the quantity of the plurality of Txs and the power of each Tx are predefined in a protocol. For example, it may be predefined that the quantity of the plurality of Txs is 2 or 4, and the power of each Tx is equal.

For example, it may be predefined that the quantity of the plurality of Txs is 2, and powers of the two Txs are both 23 dBm, or powers of the two Txs are both 26 dBm. Alternatively, it may be predefined that the quantity of the plurality of Txs is 4, and powers of the four Txs are all 23 dBm, or powers of the four Txs are all 26 dBm. When the quantity of the plurality of Txs is 2, a power ratio between the plurality of Txs is 1:1. When the quantity of the plurality of Txs is 4, a power ratio among the plurality of Txs is 1:1:1:1.

Optionally, a process of predefining the quantity of the plurality of Txs is the same as a process of predefining the quantity of the plurality of Txs in the foregoing "in another example". For details, refer to related descriptions in the foregoing "in another example". Details are not described herein again in this embodiment of this application.

The foregoing describes the plurality of Txs, and the following describes the plurality of resource sets mentioned in the foregoing embodiments. For example, the plurality of resource sets may be implemented based on the following two scenarios:

Scenario 1: The plurality of resource sets are determined by the terminal device.

Optionally, in the scenario 1, the terminal device determines the plurality of resource sets from the uplink resource.

Optionally, that the terminal device determines the plurality of resource sets from the uplink resource includes: determining the plurality of resource sets from the uplink resource based on the powers of the plurality of Txs. In other words, sizes of the resource sets are related to the powers of the plurality of Txs.

Optionally, that the terminal device determines the plurality of resource sets from the uplink resource based on the powers of the plurality of Txs includes: The terminal device determines the plurality of resource sets from the uplink resource based on a first proportion, where the first proportion is a proportion of a power of a Tx corresponding to each resource set to a sum of the powers of the plurality of Txs. In other words, each resource set corresponds to one first proportion, that is, a quantity of first proportions is equal to a quantity of resource sets.

For example, the plurality of Txs include a Tx1 and a Tx2, and a power ratio between the Tx1 and the Tx2 is 1:1. In this case, first proportions of the Tx1 and the Tx2 are both $\frac{1}{2}$. For example, the plurality of Txs include a Tx1 and a Tx2, and a power ratio between the Tx1 and the Tx2 is 1:2. In this case, a first proportion of the Tx1 is $\frac{1}{3}$, and a first proportion of the Tx2 is $\frac{2}{3}$. For example, the plurality of Txs include a Tx1, a Tx2, and a Tx3, and a power ratio among the Tx1, the Tx2, and the Tx3 is 1:1:1. In this case, first proportions of the Tx1, the Tx2, and the Tx3 are all $\frac{1}{3}$. For example, the plurality of Txs include a Tx1, a Tx2, and a Tx3, and a power ratio among the Tx1, the Tx2, and the Tx3 is 1:1:2. In this case, first proportions of the Tx1 and the Tx2 are both $\frac{1}{3}$, and a first proportion of the Tx3 is $\frac{2}{3}$.

Optionally, that the terminal device determines the plurality of resource sets from the uplink resource based on the first proportion includes: The terminal device determines sizes of the plurality of resource sets based on the first proportion, and determines frequency domain positions of the plurality of resource sets from the uplink resource based on the sizes of the plurality of resource sets.

The following describes how the terminal device determines the sizes of the plurality of resource sets.

Optionally, a size of the uplink resource is a sum of a size of a first resource and a size of a second resource. The size of the first resource is a maximum integer multiple of a first value less than the size of the uplink resource, the first value is a sum of a plurality of items in a power ratio between the plurality of Txs, and the size of the second resource is greater than or equal to 0.

It should be understood that both the size of the first resource and the size of the second resource may be a quantity of RBs included in the resource, and do not indicate a frequency domain position of the resource. For example, that the second resource is greater than or equal to 0 indicates that the quantity of RBs included in the second resource is greater than or equal to 0.

For example, the size of the uplink resource is 2X RBs, where X is a positive integer, the plurality of Txs include a Tx1 and a Tx2, and a power ratio between the Tx1 and the Tx2 is 1:1. In this case, the first value is 2. Therefore, the size of the first resource is 2X RBs. In other words, in this case, the size of the second resource is 0, that is, the size of the uplink resource is equal to the size of the first resource.

For example, the size of the uplink resource is 2X+1 RBs, where X is a positive integer, the plurality of Txs include a Tx1 and a Tx2, and a power ratio between the Tx1 and the Tx2 is 1:1. In this case, the first value is 2. Therefore, the size of the first resource is 2X RBs. In other words, in this case, the size of the second resource is 1 RB, that is, the size of the uplink resource is equal to a sum of the size of the first resource and the size of the second resource.

When the second resource is equal to 0, the size of the uplink resource is equal to the size of the first resource.

The sizes of the plurality of resource sets and the first proportion may meet a rule 1: A proportion of the uplink resource occupied by each of the plurality of resource sets is equal to a first proportion corresponding to each resource set.

In other words, the terminal device may determine the sizes of the plurality of resource sets according to the rule 1. In addition, when the size of the second resource is 0, the size of the uplink resource is equal to the size of the first resource. Therefore, it may also be considered that the terminal device determines the sizes of the plurality of resource sets according to the rule 1.

In a first example, the size of the uplink resource is 2X RBs, where X is a positive integer, the plurality of Txs include a Tx1 and a Tx2, and a power ratio between the Tx1 and the Tx2 is 1:1. In this case, the first value is 2, and the size of the uplink resource is equal to the size of the first resource. Because first proportions of the Tx1 and the Tx2 are both $\frac{1}{2}$, sizes of resource sets of the Tx1 and the Tx2 are both $X$ RBs. To be specific, the terminal device may allocate $X$ RBs to each Tx based on the 2X RBs of the uplink resource, so that the sizes of the resource sets of the Tx1 and the Tx2 are both equal to $X$ RBs.

In a second example, the size of the uplink resource is 3X RBs, where X is a positive integer, the plurality of Txs include a Tx1 and a Tx2, and a power ratio between the Tx1 and the Tx2 is 1:2. In this case, the first value is 3, and the size of the uplink resource is equal to the size of the first resource. Because a first proportion of the Tx1 is $\frac{1}{3}$, and a first proportion of the Tx2 is $\frac{2}{3}$, a size of a resource set of the Tx1 is X RBs, and a size of a resource set of the Tx2 is 2$X$ RBs. To be specific, the terminal device may allocate X RBs to the Tx1 and allocate 2$X$ RBs to the Tx2 based on the 3X RBs of the uplink resource, so that the size of the resource set of the Tx1 is X RBs, and the size of the resource set of the Tx2 is 2X RBs.

In a third example, the size of the uplink resource is 3X RBs, the plurality of Txs include a Tx1, a Tx2, and a Tx3, and a power ratio among the Tx1, the Tx2, and the Tx3 is 1:1:1. In this case, the first value is 3, and the size of the uplink resource is equal to the size of the first resource. Because first proportions of the Tx1, the Tx2, and the Tx3 are all $\frac{1}{3}$, sizes of resource sets of the Tx1, the Tx2, and the Tx3 are all X RBs. To be specific, the terminal device may allocate $X$ RBs to each Tx based on the 3X RBs of the uplink resource, so that the sizes of the resource sets of the Tx1, the Tx2, and the Tx3 are all X RBs.

When the second resource is greater than 0, that is, the size of the uplink resource is equal to the sum of the size of the first resource and the size of the second resource, the terminal device may determine the sizes of the plurality of resource sets in the following two possible implementations:

In a possible implementation, the plurality of resource sets and the first proportion may meet a rule 2: A proportion of the uplink resource occupied by each of M resource sets in the plurality of resource sets is less than a first proportion corresponding to each of the M resource sets, a proportion of the uplink resource occupied by each of N resource sets in the plurality of resource sets is greater than a first proportion corresponding to each of the N resource sets, a sum of M and N is equal to the quantity of the plurality of Txs, and M and N are positive integers. In other words, the terminal device may determine the plurality of resource sets according to the rule 2.

Optionally, a size of each of the plurality of resource sets includes a sum of a size of a first set and a size of a second set. The size of the first set is determined based on a size of a first resource. The size of the second set is determined based on a size of a second resource. The size of the second set is greater than or equal to 0.

It should be understood that both the size of the first set and the size of the second set may be a quantity of RBs included in a resource, and do not indicate a frequency domain position of the resource. For example, that the size of the second set is greater than or equal to 0 may be understood as that a quantity of RBs included in the second set is greater than or equal to 0.

For example, a manner in which the terminal device determines the size of the first set based on the size of the first resource is similar to a manner in which the terminal device determines the sizes of the plurality of resource sets based on the size of the uplink resource when the size of the second resource is equal to 0. For details, refer to related descriptions in the foregoing case in which the size of the second resource is equal to 0. Details are not described herein again in this application.

In a fourth example, the size of the uplink resource is 2X+1 RBs, where X is a positive integer, the plurality of Txs include a Tx1 and a Tx2, and a power ratio between the Tx1 and the Tx2 is 1:1. In this case, the first value is 2, the size of the uplink resource is equal to a sum of a size of a first resource and a size of a second resource, the size of the first resource is 2X RBs, and the size of the second resource is 1 RB. Because first proportions of the Tx1 and the Tx2 are both $\frac{1}{2}$, the terminal device may separately allocate X RBs to both the Tx1 and the Tx2 based on the size of the first resource (2X RBs), so that sizes of first sets of the Tx1 and the Tx2 are both $X$ RBs.

In addition, because the size of the second resource is 1 RB, the terminal device may allocate, based on the 1 RB of the second resource, 1 RBs to one of the Tx1 and the Tx2, and allocate 0 RBs to the other Tx, so that a size of a second set of one Tx is 1 RBs, and a size of a second set of the other Tx is 0 RBs.

Further, a size of a resource set of the Tx1 may be *X+1* RBs, and correspondingly, a size of a resource set of the Tx2 is *X* RBs. Alternatively, the size of the resource set of the Tx1 may be *X* RBs, and correspondingly, the size of the resource set of the Tx2 is *X+1* RBs. In this case, both M and N are equal to 1.

In a fifth example, the size of the uplink resource is *3X+1* RBs, where X is a positive integer, the plurality of Txs include a Tx1 and a Tx2, and a power ratio between the Tx1 and the Tx2 is 1:2. In this case, the first value is 3, the size of the uplink resource is equal to a sum of a size of a first resource and a size of a second resource, the size of the first resource is 3X RBs, and the size of the second resource is 1 RB. Because a first proportion of the Tx1 is $\frac{1}{3}$, and a first proportion of the Tx2 is $\frac{2}{3}$, the terminal device may allocate X RBs to the Tx1 and allocate 2X RBs to the Tx2 based on the 3X RBs of the first resource, so that a size of a first set of the Tx1 is *X* RBs, and a size of a first set of the Tx2 is *2X* RBs.

In addition, because the size of the second resource is 1 RB, the terminal device may allocate, based on the 1 RB of the second resource, 1 RBs to one of the Tx1 and the Tx2, and allocate 0 RBs to the other Tx, so that a size of a second set of one Tx is 1 RBs, and a size of a second set of the other Tx includes 0 RBs.

Further, a size of a resource set of the Tx1 may be *X+1* RBs, and correspondingly, a size of a resource set of the Tx2 is *2X* RBs. Alternatively, the size of the resource set of the Tx1 may be *X* RBs, and correspondingly, the size of the resource set of the Tx2 is 2*X*+1 RBs. In this case, both M and N are equal to 1.

In a sixth example, the size of the uplink resource is 3*X*+2 RBs, where *X* is a positive integer, the plurality of Txs include a Tx1 and a Tx2, and a power ratio between the Tx1 and the Tx2 is 1:2. In this case, the first value is 3, the size of the uplink resource is equal to a sum of a size of a first resource and a size of a second resource, the size of the first resource is 3X RBs, and the size of the second resource is 2 RBs. Because a first proportion of the Tx1 is $\frac{1}{3}$, and a first proportion of the Tx2 is $\frac{2}{3}$, the terminal device may allocate X RBs to the Tx1 and allocate 2X RBs to the Tx2 based on the 3X RBs of the first resource, so that a size of a first set of the Tx1 is *X* RBs, and a size of a first set of the Tx2 is *2X* RBs.

In addition, because the size of the second resource is 2 RBs, the terminal device may separately allocate 1 RBs to the Tx1 and the Tx2 based on the 2 RBs of the second resource, so that sizes of second sets of the Tx1 and the Tx2 are both 1 RBs.

Further, a size of a resource set of the Tx1 may be *X* + 1 RBs, and a size of a resource set of the Tx2 is 2*X* + 1 RBs. In this case, both M and N are equal to 1.

In a seventh example, the size of the uplink resource is *3X* + 1 RBs, the plurality of Txs include a Tx1, a Tx2, and a Tx3, and a power ratio among the Tx1, the Tx2, and the Tx3 is 1:1:1. In this case, the first value is 3, the size of the uplink resource is equal to a sum of a size of a first resource and a size of a second resource, the size of the first resource is 3X RBs, and the size of the second resource is 1 RB. Because first proportions of the Tx1, the Tx2, and the Tx3 are all $\frac{1}{3}$, sizes of resource sets of the Tx1, the Tx2, and the Tx3 are all X RBs. To be specific, the terminal device may allocate X RBs to each Tx based on the 3X RBs of the first resource, so that the sizes of the resource sets of the Tx1, the Tx2, and the Tx3 are all X RBs.

In addition, because the size of the second resource is 1 RB, the terminal device may allocate, based on the 1 RB of the second resource, 1 RBs to one of the Tx1 and the Tx2, and allocate 0 RBs to the other Tx, so that a size of a second set of one Tx is 1 RBs, and a size of a second set of the other Tx is 0 RBs.

Further, a size of a resource set of the Tx1 may be *X+1* RBs, and correspondingly, sizes of resource sets of the Tx2 and the Tx3 are both 2*X* RBs. Alternatively, sizes of resource sets of the Tx1 and the Tx2 are both X RBs, and correspondingly, a size of a resource set of the Tx3 is *X+1* RB. Alternatively, sizes of resource sets of the Tx1 and the Tx3 are both *X* RBs, and correspondingly, a size of a resource set of the Tx2 is *X+1* RB. In this case, M is equal to 2, and N is equal to 1.

In an eighth example, the size of the uplink resource is *3X* + 2 RBs, the plurality of Txs include a Tx1, a Tx2, and a Tx3, and a power ratio among the Tx1, the Tx2, and the Tx3 is 1:1:1. In this case, the first value is 3, the size of the uplink resource is equal to a sum of a size of a first resource and a size of a second resource, the size of the first resource is 3X RBs, and the size of the second resource is 2 RBs. Because first proportions of the Tx1, the Tx2, and the Tx3 are all $\frac{1}{3}$, sizes of resource sets of the Tx1, the Tx2, and the Tx3 are all X RBs. To be specific, the terminal device may allocate *X* RBs to each Tx based on the 3X RBs of the first resource, so that the sizes of the resource sets of the Tx1, the Tx2, and the Tx3 are all X RBs.

In addition, because the size of the second resource is 2 RBs, the terminal device may allocate, based on the 2 RBs of the second resource, 1 RBs to any two of the Tx1, the Tx2, and the Tx3, and allocate 0 RBs to another Tx, so that sizes of second sets of any two of the Tx1, the Tx2, and the Tx3 are both 1 RBs, and a size of a second set of the another Tx is 0 RBs.

Further, sizes of resource sets of the Tx1 and the Tx2 may be both $X$+1 RBs, and correspondingly, a size of a resource set of the Tx3 is $2X$ RBs. Alternatively, sizes of resource sets of the Tx1 and the Tx3 are both $X + 1$ RBs, and correspondingly, a size of a resource set of the Tx2 is $X$ RBs. Alternatively, sizes of resource sets of the Tx2 and the Tx3 are both $X + 1$ RBs, and correspondingly, a size of a resource set of the Tx2 is $X$ RBs. In this case, M is equal to 1, and N is equal to 2.

In another possible implementation, the first information includes first indication information. The terminal device determines the plurality of resource sets based on the first indication information. The first indication information indicates a size relationship between the plurality of resource sets.

For example, the first indication information may be carried in downlink control information (downlink control information, DCI). For example, the DCI may include a DCI format 0_1 or a DCI format 0_0.

Optionally, the terminal device may determine, based on the first indication information, the sizes of the plurality of resource sets from a correspondence between a size of a resource set and indication information. For example, the first indication information may include an index.

Optionally, the correspondence between the size of the resource set and the indication information is preconfigured. For example, the correspondence may be predefined in a protocol, or the correspondence may be configured by the network device and notified to the terminal device.

Optionally, the correspondence between the size of the resource set and the indication information may be represented by using a table, or the correspondence may be represented by using a set.

In a first possible implementation, when the size of the uplink resource is $2X + 1$ RBs, the plurality of Txs include a Tx1 and a Tx2, and a power ratio between the Tx1 and the Tx2 is 1:1 (that is, the case in the fourth example), if the correspondence between the size of the resource set and the indication information is represented by using a table, the correspondence between the size of the resource set and the indication information may include content shown in Table 1.

Table 1

| First indication information | Size of a resource set 1 | Size of a resource set 2 |
|---|---|---|
| Indication information 1 | $X + 1$ RBs | $X$ RBs |
| Indication information 2 | $X$ RBs | $X + 1$ RBs |

As shown in Table 1, when the first indication information is the indication information 1, the size of the resource set 1 is $X + 1$ RBs, and correspondingly, the size of the resource set 2 is $X$ RBs. When the first indication information is the indication information 2, the size of the resource set 1 is $X + 1$ RBs, and correspondingly, the size of the resource set 2 is $X$ RBs.

When the correspondence between the size of the resource set and the indication information is represented by using a set, the correspondence may be represented as {indication information 1: $X + 1$ RBs, $X$ RBs}, and {indication information 2: $X$ RBs, $X + 1$ RBs}. In the foregoing set, the first column represents the first indication information, the second column represents the size of the resource set 1, and the third column represents the size of the resource set 2. The correspondence between the size of the resource set and the indication information in the set is the same as the correspondence shown in Table 1. For details, refer to related descriptions in Table 1. Details are not described herein again in this application.

In this case, the first indication information may be represented by using 2 bits. In other words, a value of the indication information 1 may be 1, and correspondingly, a value of the indication information 2 is 0. Alternatively, the value of the indication information 1 may be 0, and correspondingly, the value of the indication information 2 may be 1.

In a second possible implementation, when the size of the uplink resource is $3X + 1$ RBs, the plurality of Txs include a Tx1 and a Tx2, and a power ratio between the plurality of Txs is 1:2, a power ratio between the Tx1 and the Tx2 may be 1:2 (that is, the case in the foregoing fifth example), or the power ratio between the Tx1 and the Tx2 may be 2:1. If the correspondence between the size of the resource set and the indication information is represented by using a table, the correspondence between the size of the resource set and the indication information may include content shown in Table 2.

Table 2

| First indication information | Size of a resource set 1 | Size of a resource set 2 |
|---|---|---|
| Indication information 1 | $X + 1$ RBs | $2X$ RBs |
| Indication information 2 | $2X$ RBs | $X + 1$ RBs |
| Indication information 3 | $X$ RBs | $2X + 1$ RBs |
| Indication information 4 | $2X + 1$ RBs | $X$ RBs |

As shown in Table 2, when the first indication information is the indication information 1, the size of the resource set 1 is $X + 1$ RBs, and correspondingly, the size of the resource set 2 is $X$ RBs. When the first indication information is the indication information 2, the size of the resource set 1 is $X + 1$ RBs, and correspondingly, the size of the resource set 2 is $X$ RBs. When the first indication information is the indication information 3, the size of the resource set 1 is $X$ RBs, and correspondingly, the size of the resource set 2 is $2X + 1$ RBs. When the first indication information is the indication information 3, the size of the resource set 1 is $2X + 1$ RBs, and correspondingly, the size of the resource set 2 is $X$ RBs.

When the correspondence between the size of the resource set and the indication information is represented by using a set, the correspondence may be represented as {indication information 1: $X + 1$ RBs, $2X$ RBs}, {indication information 2: $2X$ RBs, $X + 1$ RBs}, {indication information 3: $X$ RBs, $2X + 1$ RBs}, and {indication information 4: $2X + 1$ RBs, $X$ RBs}. In the foregoing set, the first column represents the first indication information, the second column represents the size of the resource set 1, and the third column represents the size of the resource set 2. The correspondence between the size of the resource set and the indication information in the set is the same as the correspondence shown in Table 2. For details, refer to related descriptions in Table 2. Details are not described herein again in this application.

In this case, the first indication information may be represented by using 2 bits, and values of the 2 bits may be 00, 01, 10, and 11. Different values of the 2 bits respectively correspond to different indication information. For example, a value of the indication information 1 may be 00, a value of the indication information 2 may be 01, a value of the indication information 3 may be 10, and a value of the indication information 4 may be 11.

In a third possible implementation, when the size of the uplink resource is $3X + 2$ RBs, the plurality of Txs include a Tx1 and a Tx2, and a power ratio between the plurality of Txs is 1:2, a power ratio between the Tx1 and the Tx2 may be 1:2 (that is, the case in the sixth example), or the power ratio between the Tx1 and the Tx2 may be 2:1. If the correspondence between the size of the resource set and the indication information is represented by using a table, the correspondence between the size of the resource set and the indication information may include content shown in Table 3.

Table 3

| First indication information | Size of a resource set 1 | Size of a resource set 2 |
|---|---|---|
| Indication information 1 | $X + 1$ RBs | $2X + 1$ RBs |
| Indication information 2 | $2X + 1$ RBs | $X + 1$ RBs |

As shown in Table 3, when the first indication information is the indication information 1, the size of the resource set 1 is $X + 1$ RBs, and correspondingly, the size of the resource set 2 is $2X + 1$ RBs. When the first indication information is the indication information 2, the size of the resource set 1 is $2X + 1$ RBs, and correspondingly, the size of the resource set 2 is $X + 1$ RBs.

When the correspondence between the size of the resource set and the indication information is represented by using a set, the correspondence may be represented as {indication information 1: $X + 1$ RBs, $2X + 1$ RBs}, and {indication information 2: $2X + 1$ RBs, $X + 1$ RBs}. In the foregoing set, the first column represents the first indication information, the second column represents the size of the resource set 1, and the third column represents the size of the resource set 2. The correspondence between the size of the resource set and the indication information in the set is the same as the correspondence shown in Table 3. For details, refer to related descriptions in Table 3. Details are not described herein again in this application.

In this case, the first indication information may be represented by using 2 bits. In other words, a value of the indication information 1 may be 1, and correspondingly, a value of the indication information 2 is 0. Alternatively, the value of the indication information 1 may be 0, and correspondingly, the value of the indication information 2 may be 1.

In a fourth possible implementation, when the size of the uplink resource is $3X + 1$ RBs, the plurality of Txs include a Tx1, a Tx2, and a Tx3, and a power ratio among the plurality of Txs is 1:1:1 (that is, the case in the seventh example), if the correspondence between the size of the resource set and the indication information is represented by using a table, the correspondence between the size of the resource set and the indication information may include content shown in Table 4.

Table 4

| First indication information | Size of a resource set 1 | Size of a resource set 2 | Size of a resource set 3 |
|---|---|---|---|
| Indication information 1 | $X$ + 1 RBs | $X$ RBs | $X$ RBs |
| Indication information 2 | $X$ RBs | $X$ + 1 RBs | $X$ RBs |
| Indication information 3 | $X$ RBs | $X$ RBs | $X$ + 1 RBs |

As shown in Table 4, when the first indication information is the indication information 1, the size of the resource set 1 is $X$ + 1 RBs, the size of the resource set 2 is $X$ RBs, and the size of the resource set 3 is $X$ RBs. When the first indication information is the indication information 2, the size of the resource set 1 is $X$ RBs, the size of the resource set 2 is $X$ + 1 RBs, and the size of the resource set 3 is $X$ RBs. When the first indication information is the indication information 3, the size of the resource set 1 is $X$ RBs, the size of the resource set 2 is $X$ RBs, and the size of the resource set 3 is $X$ + 1 RBs.

When the correspondence between the size of the resource set and the indication information is represented by using a set, the correspondence may be represented as {indication information 1: $X$ + 1 RBs, $X$ RBs, $X$ RBs}, {indication information 2: $X$ RBs, $X$ + 1 RBs, $X$ RBs}, and {indication information 3: $X$ RBs, $X$ RBs, $X$ + 1 RBs}. In the foregoing set, the first column represents the first indication information, the second column represents the size of the resource set 1, the third column represents the size of the resource set 2, and the fourth column represents the size of the resource set 3. The correspondence between the size of the resource set and the indication information in the set is the same as the correspondence shown in Table 4. For details, refer to related descriptions in Table 4. Details are not described herein again in this application.

In this case, the first indication information may be represented by using 2 bits, and values of the indication information 1, the indication information 2, and the indication information 3 may be any three of 00, 10, 01, and 11. For example, a value of the indication information 1 may be 00, a value of the indication information 2 may be 01, a value of the indication information 3 may be 10, and a value of the indication information 4 may be 11.

In a fifth possible implementation, when the size of the uplink resource is $3X$ + 2 RBs, sizes of the plurality of Txs are a Tx1, a Tx2, and a Tx3, and a power ratio among the plurality of Txs is 1:1:1 (for example, the case in the eighth example), if the correspondence between the size of the resource set and the indication information is represented by using a table, the correspondence between the size of the resource set and the indication information may include content shown in Table 5.

Table 5

| First indication information | Size of a resource set 1 | Size of a resource set 2 | Size of a resource set 3 |
|---|---|---|---|
| Indication information 1 | $X$ + 1 RBs | $X$ + 1 RBs | $X$ RBs |
| Indication information 2 | $X$ RBs | $X$ + 1 RBs | $X$ + 1 RBs |
| Indication information 3 | $X$ + 1 RBs | $X$ RBs | $X$ + 1 RBs |

As shown in Table 4, when the first indication information is the indication information 1, the size of the resource set 1 is $X$ + 1 RBs, the size of the resource set 2 is $X$ + 1 RBs, and the size of the resource set 3 is $X$ RBs. When the first indication information is the indication information 2, the size of the resource set 1 is $X$ RBs, the size of the resource set 2 is $X$ + 1 RBs, and the size of the resource set 3 is $X$ + 1 RBs. When the first indication information is the indication information 3, the size of the resource set 1 is $X$ + 1 RBs, the size of the resource set 2 is $X$ RBs, and the size of the resource set 3 is $X$ + 1 RBs.

When the correspondence between the size of the resource set and the indication information is represented by using a set, the correspondence may be represented as {indication information 1: $X$ + 1 RBs, $X$ + 1 RBs, $X$ RBs}, {indication information 2: $X$ RBs, $X$ + 1 RBs, $X$ + 1 RBs}, and {indication information 3: $X$ + 1 RBs, $X$ RBs, $X$ + 1 RBs}. In the foregoing set, the first column represents the first indication information, the second column represents the size of the resource set 1, the third column represents the size of the resource set 2, and the fourth column represents the size of the resource set 3. The correspondence between the size of the resource set and the indication information in the set is the same as the correspondence shown in Table 5. For details, refer to related descriptions in Table 5. Details are not described herein again in this application.

In this case, the first indication information may be represented by using 2 bits, and values of the indication information 1, the indication information 2, and the indication information 3 may be any three of 00, 10, 01, and 11. For example, a value of the indication information 1 may be 00, a value of the indication information 2 may be 01, a value of the indication information 3 may be 10, and a value of the indication information 4 may be 11.

The foregoing describes how the terminal device determines the sizes of the plurality of resource sets. The following describes how the terminal device determines frequency domain positions of the plurality of resource sets.

Optionally, after determining the sizes of the plurality of resource sets, the terminal device may determine, based on a size of each resource set from the uplink resource, a frequency domain position of each resource set, that is, an RB sequence of each resource set.

For example, the size of the uplink resource is 2X RBs (sequences of X RBs are 1 to 2X), the quantity of the plurality of Txs is 2, and sizes of resource sets of a Tx1 and a Tx2 in the two Txs are both X RBs. In this case, the terminal device may determine RBs whose sequences are 1 to X as a resource set of the Tx1, that is, frequency domain positions of the Tx1 are positions of the RBs whose sequences are 1 to X, and determine RBs whose sequences are X+1 to 2X as a resource set of the Tx2, that is, frequency domain positions of the Tx2 are positions of the RBs whose sequences are X+1 to 2X. Alternatively, the terminal device may determine RBs whose sequences are 1 to X as the resource set of the Tx2, that is, frequency domain positions of the Tx2 are positions of the RBs whose sequences are 1 to X, and determine RBs whose sequences are X+1 to 2X as the resource set of the Tx1, that is, frequency domain positions of the Tx1 are positions of RBs whose sequences are X+1 to 2X.

The foregoing is described only by using an example in which the size of the uplink resource is 2X RBs (sequences of X RBs are 1 to 2X), the quantity of the plurality of Txs is 2, and sizes of resource sets of the Tx1 and the Tx2 in the two Txs are both X RBs. For a case in which at least one of the uplink resource, the quantity of the plurality of Txs, and a quantity of RBs included in a resource of each Tx changes, refer to a case in which the size of the uplink resource is 2X RBs (sequences of X RBs are 1 to 2X), the quantity of the plurality of Txs is 2, and the resource sets of the Tx1 and the Tx2 in the two Txs both include X RBs. Details are not described herein again in this application.

Scenario 2: The plurality of resource sets are determined by the network device.

Optionally, in the scenario 2, the first information includes information that separately indicates the plurality of resource sets.

For example, after determining the plurality of resource sets, the network device notifies, through the information that separately indicates the plurality of resource sets, the terminal device of a resource set corresponding to each Tx.

For example, the information that separately indicates the plurality of resource sets may be located in a plurality of fields of DCI. For example, the plurality of resources include two fields. A first field may indicate a resource set of a Tx1, and a second field may indicate a resource set of a Tx2. Alternatively, the first field may indicate the resource set of the Tx2, and the second field may indicate the resource set of the Tx1.

Optionally, the network device may determine the plurality of resource sets in the following three manners: Manner 1: The network device determines the plurality of resource sets based on the uplink resource.

Optionally, in Manner 1, the network device determines the plurality of resource sets from the uplink resource.

Optionally, that the network device determines the plurality of resource sets from the uplink resource includes: determining the plurality of resource sets from the uplink resource based on the powers of the plurality of Txs. In other words, the resource sets are related to the powers of the plurality of Txs.

Optionally, that the network device determines the plurality of resource sets from the uplink resource based on the powers of the plurality of Txs includes: The network device determines the plurality of resource sets from the uplink resource based on a first proportion, where the first proportion is a proportion of a power of a Tx corresponding to each resource set to a sum of the powers of the plurality of Txs. In other words, each resource set corresponds to one first proportion, that is, a quantity of first proportions is equal to a quantity of resource sets.

Optionally, that the network device determines the plurality of resource sets from the uplink resource based on the first proportion includes: The network device determines sizes of the plurality of resource sets based on the first proportion, and determines frequency domain positions of the plurality of resource sets from the uplink resource based on the sizes of the plurality of resource sets.

Optionally, a process in which the network device determines the sizes of the plurality of resource sets and the frequency domain positions of the plurality of resource sets is the same as a process in which the terminal device determines the sizes of the plurality of resource sets and the frequency domain positions of the plurality of resource sets in the foregoing scenario 1. For details, refer to related descriptions in the foregoing scenario 1. Details are not described herein again in this application.

Manner 2: The network device determines the plurality of resource sets based on a reference signal corresponding to each Tx.

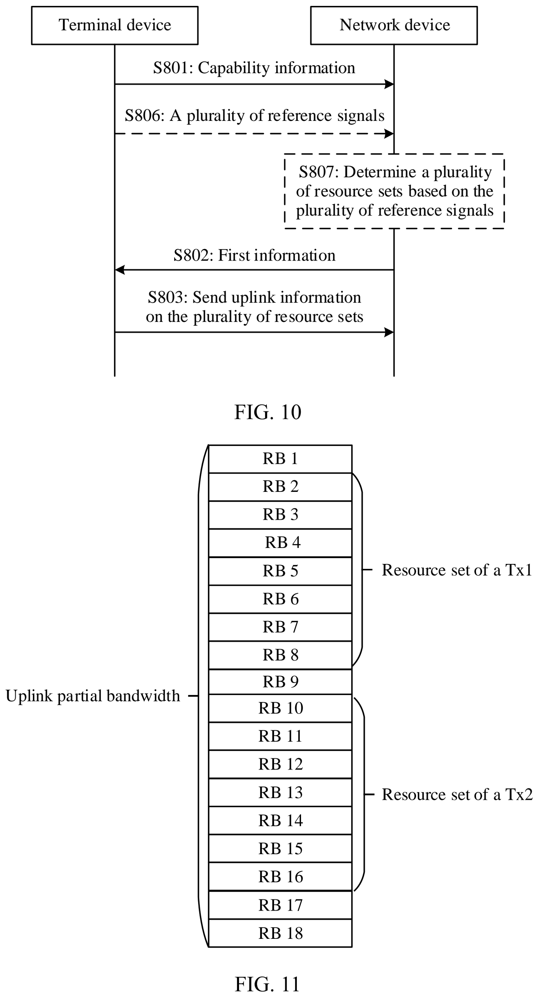

Optionally, before step S802, as shown in FIG. 10, the communication method further includes steps S806 and S807.

Step S806: The terminal device sends a plurality of reference signals to the network device, and correspondingly, the network device receives the plurality of reference signals from the terminal device. The plurality of reference signals respectively correspond to the plurality of Txs. For example, one reference signal is sent on each Tx.

Step S807: The network device determines the plurality of resource sets based on the plurality of reference signals. For example, the reference signal includes a sounding reference signal (sounding reference signal, SRS).

Optionally, before step S806, the network device configures a resource set for each Tx.

Optionally, the network device determines, based on an optimal resource in the resource set carrying the reference signal, that the optimal resource is the resource set of the Tx corresponding to the reference signal. The optimal resource may be a resource with an optimal channel condition.

For example, the network device measures, based on a reference signal of each Tx, an optimal resource in a resource set corresponding to each Tx, and determines the optimal resource corresponding to each Tx as the resource set of each Tx. For example, the network device determines a resource set of one Tx based on a reference signal of the Tx. The network device measures, based on the reference signal, a resource set corresponding to the Tx, determines a position of an optimal RB in the resource set as the resource set of the Tx, and notifies the terminal device through information that indicates the resource set. Similarly, the network device determines, according to the foregoing method, a resource set corresponding to each Tx, and notifies the terminal device through information that indicates the resource set.

FIG. 11 is an example of a plurality of resource sets according to an embodiment of this application.

In FIG. 11, a quantity of the plurality of Txs is 2, an optimal resource determined based on a reference signal of a Tx1 is an RB 2 to an RB 8, and an optimal resource determined based on a reference signal of a Tx2 is an RB 10 to an RB 16. Therefore, a resource set of the Tx1 is the RB 2 to the RB 8, and a resource set of the Tx2 is the RB 10 to the RB 16. The terminal device may send the uplink information on the resource set RB 2 to RB 8 and the resource set RB 10 to RB 16. Correspondingly, the network device may receive the uplink information on the resource set RB 2 to RB 8 and the resource set RB 10 to RB 16.

Manner 3: The network device determines the plurality of resource sets based on the uplink resource and a reference signal corresponding to each Tx.

Optionally, in Manner 3, that the network device determines the plurality of resource sets based on the uplink resource and the reference signal corresponding to each Tx includes: The network device determines sizes of the plurality of resource sets based on a size of the uplink resource, and determines frequency domain positions of the plurality of resource sets based on the sizes of the plurality of resource sets and the reference signal corresponding to each Tx.

For example, a process in which the network device determines the sizes of the plurality of resource sets is the same as a process in which the sizes of the plurality of resource sets are determined in Manner 1. For details, refer to related descriptions in Manner 1. Details are not described herein again in this embodiment of this application.

The following describes how the network device determines the frequency domain positions of the plurality of resource sets based on the sizes of the plurality of resource sets and the reference signal corresponding to each Tx.

Optionally, the network device determines Y optimal resources from a resource set carrying a reference signal, and determines the Y optimal resources as a resource set of a Tx corresponding to the reference signal. Y is a size of the resource set of the Tx corresponding to the reference signal, and Y is a positive integer.

For example, the network device measures, based on the reference signal of each Tx, Y optimal resources in a resource set corresponding to each Tx, and determines positions of the Y optimal resources of each Tx as frequency domain positions of the resource set of each Tx. For example, the network device determines a frequency domain position of a resource set of one Tx based on a reference signal of the Tx, and a size of the resource set is 10 RBs. In this case, the network device measures, based on the reference signal, a resource group corresponding to the Tx, determines positions of 10 optimal RBs in the resource group as frequency domain positions of the resource set of the Tx, and notifies the terminal device through information that indicates the resource set. Similarly, the network device determines, according to the foregoing method, a frequency domain position of a resource set corresponding to each Tx, and notifies the terminal device through information that indicates the resource set.

According to the communication method provided in this application, a case in which powers of Txs are reduced when OBOs of the plurality of Txs are different can be avoided, and a high gain can be achieved in a low channel condition.

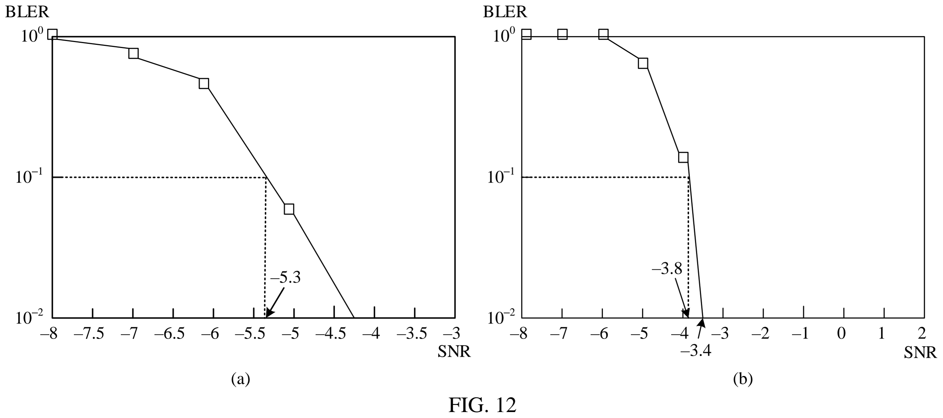

For example, FIG. 12 shows a curve of a demodulation SNR threshold on a low-correlation channel in the communication method provided in this application. The low-correlation channel in FIG. 12 is the same as the low-correlation channel in FIG. 3. For details, refer to related descriptions in FIG. 3. Details are not described herein again in this application. In (a) in FIG. 12, two Txs and four Rxs (that is, 2T4R) are used as an example. When a BLER is $10^{-1}$, an SNR of the FSTD technology that supports the plurality of mutually independent Txs and that is provided in this application is -5.3 dB, and is less than the demodulation SNR threshold (-4.6 dB) of the delay 1 in the CDD technology in FIG. 3. In (b) in FIG. 12, two Txs and eight Rxs (that is, 2T8R) are used as an example. When a BLER is $10^{-1}$, a demodulation SNR threshold of the FSTD technology that supports the plurality of mutually independent Txs and that is provided in this application is -3.8 dB, and is less than the demodulation SNR threshold (-3.4 dB) of the delay 1 in the CDD technology in FIG. 3.

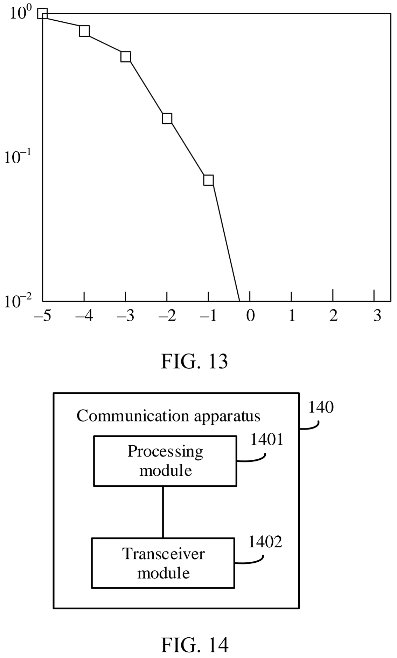

FIG. 13 shows a curve of a demodulation SNR threshold on a high-correlation channel in the communication method provided in this application. The low-correlation channel in FIG. 13 is the same as the high-correlation channel in FIG. 4. For details, refer to related descriptions in FIG. 4. Details are not described herein again in this application. In FIG. 13, two Txs and two Rxs (namely, 2T2R) are used as an example. When BLERs are different, demodulation SNR thresholds of the FSTD technology that supports the plurality of mutually independent Txs and that is provided in this application are all less than the demodulation SNR threshold of the delay 1 in the CDD technology in FIG. 4.

It can be learned from FIG. 12 and FIG. 13 that, under a same BLER, a demodulation SNR threshold in the solution of this application is smaller than that in the CDD technology. In other words, in this application, a low BLER can be achieved in a low channel condition, and a high gain can be achieved.

It should be noted that the foregoing uses only an example in which the quantity of the plurality of Txs is 2 or 3 and the power of each Tx is 23 dBm or 26 dBm for description. Actually, embodiments of this application further support FSTD of more than three mutually independent Txs. Further, powers of the more than three Txs may alternatively be 29 dBm, 31 dBm, or greater than 31 dBm. This is not limited in embodiments of this application.

The foregoing is described only by using an example in which the uplink resource includes a plurality of RBs (for example, the uplink resource includes ZX RBs). A case in which the uplink resource includes a plurality of RBGs is similar to the case in which the uplink resource includes the plurality of RBs. For details, refer to the foregoing related descriptions of the case in which the uplink resource includes the plurality of RBs. Details are not described again in this application.

It may be understood that in the foregoing embodiments, the methods and/or the steps implemented by the network device may alternatively be implemented by a component (for example, a processor, a chip, a chip system, a circuit, a logical module, or software like a chip or a circuit) that can be used in the network device; and the methods and/or the steps implemented by the terminal device may alternatively be implemented by a component (for example, a processor, a chip, a chip system, a circuit, a logical module, or software like a chip or a circuit) that can be used in the terminal device.

The foregoing mainly describes the solutions provided in this application. Correspondingly, this application further provides a communication apparatus, and the communication apparatus is configured to implement the foregoing methods. The communication apparatus may be the terminal device in the foregoing method embodiments, an apparatus including the foregoing terminal device, or a component that can be used in the terminal device, for example, a chip or a chip system. Alternatively, the communication apparatus may be the network device in the foregoing method embodiments, an apparatus including the foregoing network device, or a component that can be used in the network device, for example, a chip or a chip system.

It may be understood that, to implement the foregoing functions, the communication apparatus includes a corresponding hardware structure and/or software module for performing a corresponding function. A person skilled in the art should easily be aware that, in combination with units and algorithm steps of examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used.

FIG. 14 is a diagram of a structure of a communication apparatus 140. The communication apparatus 140 includes a processing module 1401 and a transceiver module 1402. The communication apparatus 140 may be configured to implement functions of the network device or the terminal device.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the network device or the terminal device in the foregoing method embodiments, and/or configured to support another process of the technology described in this specification. The processing module 1401 may be configured to perform a processing (for example, determining or generating) step performed by the network device or the terminal device in the foregoing method embodiments, and/or configured to support another process of the technology described in this specification.

When the communication apparatus 140 is configured to implement functions of the terminal device:
in some embodiments, the transceiver module 1402 is configured to send capability information, where the capability information indicates that the terminal device supports FSTD of a plurality of mutually independent Txs; the transceiver module 1402 is further configured to receive first information, where the first information indicates an uplink resource, the uplink resource includes a plurality of resource sets, and the plurality of resource sets respectively correspond to the plurality of Txs; and the transceiver module 1402 is further configured to send uplink information on the plurality of resource sets.

Optionally, the transceiver module 1402 is further configured to send second information, where the second information indicates a quantity of the plurality of Txs and/or a power of each of the plurality of Txs.

Optionally, the processing module 1401 is configured to determine the plurality of resource sets from the uplink resource.

Optionally, the processing module 1401 is further configured to determine the plurality of resource sets from the uplink resource based on powers of the plurality of Txs.

Optionally, the processing module 1401 is further configured to determine the plurality of resource sets from the uplink resource based on a first proportion, where the first proportion is a proportion of a power of a Tx corresponding to each resource set to a sum of the powers of the plurality of Txs.

Optionally, the transceiver module 1402 is further configured to receive third information, where the third information is used to activate the FSTD.

When the communication apparatus 140 is configured to implement functions of the network device, the transceiver module 1402 is configured to receive capability information, where the capability information indicates that a terminal device supports FSTD of a plurality of mutually independent Txs; the transceiver module 1402 is further configured to send first information to indicate an uplink resource, where the uplink resource includes a plurality of resource sets, and the plurality of resource sets respectively correspond to the plurality of Txs; and the transceiver module 1402 is further configured to receive uplink information on the plurality of resource sets.

Optionally, the transceiver module 1402 is further configured to receive second information, where the second information indicates a quantity of the plurality of Txs and/or a power of each of the plurality of Txs.

Optionally, the processing module 1401 is configured to determine the plurality of resource sets from the uplink resource.

Optionally, the processing module 1401 is further configured to determine the plurality of resource sets from the uplink resource based on powers of the plurality of Txs.

Optionally, the processing module 1401 is further configured to determine the plurality of resource sets from the uplink resource based on a first proportion, where the first proportion is a proportion of a power of a Tx corresponding to each resource set to a sum of the powers of the plurality of Txs.

Optionally, the transceiver module 1402 is further configured to receive a plurality of reference signals, where the plurality of reference signals respectively correspond to the plurality of Txs; and the processing module 1401 is further configured to determine the plurality of resource sets based on the plurality of reference signals.

Optionally, the processing module 1401 is further configured to separately perform channel estimation, equalization, demodulation, and joint decoding on the plurality of resource sets, to obtain the uplink information.

Optionally, the transceiver module 1402 is further configured to receive third information, where the third information is used to activate the FSTD.

All related content of the steps in the foregoing method embodiments may be cited in function descriptions of the corresponding functional modules. Details are not described herein again.

In this application, the communication apparatus 140 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 140 in FIG. 14 is a chip or a chip system, functions/implementation processes of the transceiver module 1402 may be implemented by using an input/output interface (or a communication interface) of the chip or the chip system, and functions/implementation processes of the processing module 1401 may be implemented by using a processor (or a processing circuit) of the chip or the chip system.

Because the communication apparatus 140 provided in this embodiment may perform the foregoing methods, for technical effect that can be achieved by the communication apparatus 140, refer to the foregoing method embodiments. Details are not described herein again.

In a possible product form, the network device or the terminal device in this embodiment of this application may be further implemented by using one or more field programmable gate arrays (field programmable gate array, FPGA), programmable logic devices (programmable logic device, PLD), controllers, state machines, gate logics, discrete hardware components, any other suitable circuit, or any combination of circuits that can perform various functions described throughout this application.

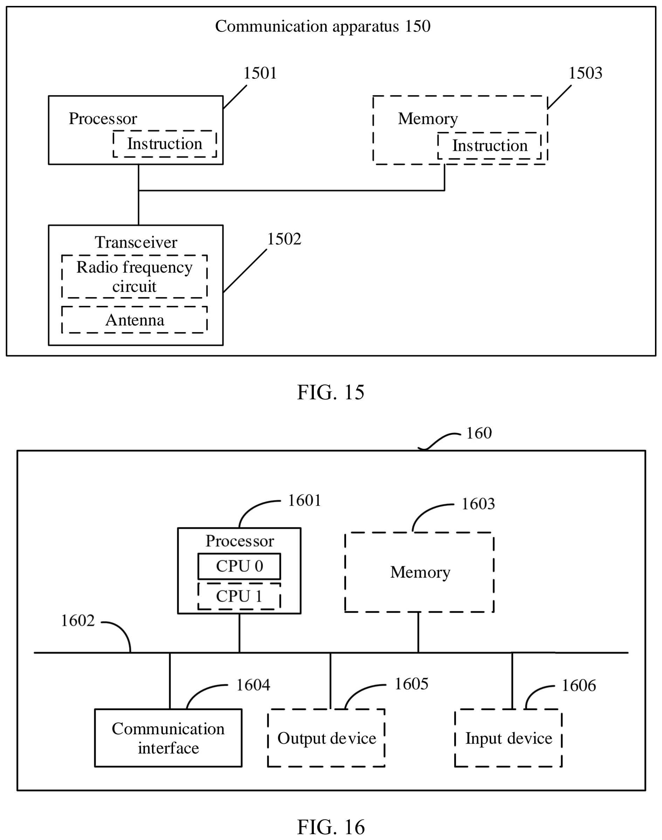

In another possible product form, the network device or the terminal device in this embodiment of this application may be implemented by using a general bus architecture. For ease of description, FIG. 15 is a diagram of a structure of a communication apparatus 150 according to an embodiment of this application. The communication apparatus 150 includes a processor 1501 and a transceiver 1502. The communication apparatus 150 may be a terminal device, or a chip or a chip system in the terminal device; or the communication apparatus 150 may be a network device, or a chip or a module in the network device. FIG. 15 shows only main components of the communication apparatus 150. In addition to the processor 1501 and the transceiver 1502, the communication apparatus may further include a memory 1503 and an input/output apparatus (not shown in FIG. 15).

Optionally, the processor 1501 is mainly configured to: process a communication protocol and communication data, control the entire communication apparatus, execute a software program, and process data of the software program. The memory 1503 is mainly configured to store the software program and the data. The transceiver 1502 may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user, and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent in a wireless manner, the processor 1501 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in terms of hardware implementation, a person skilled in the art may figure out that the communication apparatus 140 may be in a form of the communication apparatus 150 shown in FIG. 15.

In an example, functions/implementation processes of the processing module 1401 in FIG. 14 may be implemented by the processor 1501 in the communication apparatus 150 shown in FIG. 15 by invoking computer-executable instructions stored in the memory 1503. Functions/implementation processes of the transceiver module 1402 in FIG. 14 may be implemented by using the transceiver 1502 in the communication apparatus 150 shown in FIG. 15.

In still another possible product form, the network device or the terminal device in this application may use a composition structure shown in FIG. 16, or include components shown in FIG. 16. FIG. 16 is a composition diagram of a communication apparatus 160 according to this application. The communication apparatus 160 may be a terminal device, or a chip or a system on chip in the terminal device; or may be a network device, or a module, a chip, or a system on chip in the network device.

As shown in FIG. 16, the communication apparatus 160 includes at least one processor 1601 and at least one communication interface (FIG. 16 is described merely by using an example in which one communication interface 1604 and one processor 1601 are included). Optionally, the communication apparatus 160 may further include a communication bus 1602 and a memory 1603.

The processor 1601 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1601 may alternatively be another apparatus having a processing function, for example, a circuit, a component, or a software module. This is not limited.

The communication bus 1602 is configured to connect different components in the communication apparatus 160, so that the different components can communicate with each other. The communication bus 1602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 16, but this does not mean that there is only one bus or only one type of bus.

The communication interface 1604 is configured to communicate with another device or a communication network. For example, the communication interface 1604 may be a module, a circuit, a transceiver, or any apparatus that can implement communication. Optionally, the communication interface 1604 may alternatively be an input/output interface located in the processor 1601, and is configured to implement signal input and signal output of the processor.

The memory 1603 may be an apparatus having a storage function, and is configured to store instructions and/or data. The instructions may be a computer program.

For example, the memory 1603 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc memory, an optical disc memory (including a compressed optical disc, a laser disc, an optical disc, a digital versatile disc, a Blu-ray disc, or the like), a disk storage medium, or another magnetic storage device. This is not limited.

It should be noted that the memory 1603 may exist independently of the processor 1601, or may be integrated with the processor 1601. The memory 1603 may be located in the communication apparatus 160, or may be located outside the communication apparatus 160. This is not limited. The processor 1601 may be configured to execute the instructions stored in the memory 1603, to implement the method provided in the following embodiments of this application.

In an optional implementation, the communication apparatus 160 may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and may receive input from a user in a plurality of manners. For example, the input device 1606 may be a mouse, a keyboard, a touchscreen device, or a sensor device.

In some embodiments, in terms of hardware implementation, a person skilled in the art may figure out that the communication apparatus 140 may be in a form of the communication apparatus 160 shown in FIG. 16.

In an example, functions/implementation processes of the processing module 1401 in FIG. 14 may be implemented by the processor 1601 in the communication apparatus 160 shown in FIG. 16 by invoking computer-executable instructions stored in the memory 1603. Functions/implementation processes of the transceiver module 1402 in FIG. 14 may be implemented by using the communication interface 1604 in the communication apparatus 160 shown in FIG. 16.

It should be noted that the structure shown in FIG. 16 does not constitute a specific limitation on the network device or the terminal device. For example, in some other embodiments of this application, the network device or the terminal device may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to: receive computer-executable instructions (the computer-executable instructions are stored in the memory, and may be directly read from the memory, or may be read via another component), and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, this is, may be located in a same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

   sending capability information, wherein the capability information indicates that a terminal device supports frequency switched transmit diversity FSTD of a plurality of mutually independent transmit chains Txs;
   receiving first information, wherein the first information indicates an uplink resource, the uplink resource comprises a plurality of resource sets, and the plurality of resource sets respectively correspond to the plurality of Txs; and
   sending uplink information on the plurality of resource sets.

2. The method according to claim 1, wherein a quantity of the plurality of Txs is 2 or 4, and powers of the plurality of Txs are the same.

3. The method according to claim 1 or 2, wherein before receiving the first information, the method further comprises: sending second information, wherein the second information indicates the quantity of the plurality of Txs and/or a power of each of the plurality of Txs.

4. The method according to any one of claims 1 to 3, wherein before sending the uplink information on the plurality of resource sets, the method further comprises:
determining the plurality of resource sets from the uplink resource.

5. The method according to claim 4, wherein determining the plurality of resource sets from the uplink resource comprises:
determining the plurality of resource sets from the uplink resource based on the powers of the plurality of Txs.

6. The method according to claim 5, wherein determining the plurality of resource sets from the uplink resource based on the powers of the plurality of Txs comprises:
determining the plurality of resource sets from the uplink resource based on a first proportion, wherein the first proportion is a proportion of a power of a Tx corresponding to each resource set to a sum of the powers of the plurality of Txs.

7. The method according to claim 6, wherein a proportion of the uplink resource occupied by each of the plurality of resource sets is equal to a first proportion corresponding to each resource set.

8. The method according to claim 6, wherein a proportion of the uplink resource occupied by each of M resource sets in the plurality of resource sets is less than a first proportion corresponding to each of the M resource sets, a proportion of the uplink resource occupied by each of N resource sets in the plurality of resource sets is greater than a first proportion corresponding to each of the N resource sets, a sum of M and N is equal to the quantity of the plurality of Txs, and M and N are positive integers.

9. The method according to any one of claims 1 to 8, wherein the first information comprises first indication information, and the first indication information indicates a relationship between sizes of the plurality of resource sets.

10. The method according to any one of claims 1 to 3, wherein the first information comprises information that separately indicates the plurality of resource sets.

11. The method according to any one of claims 1 to 10, wherein before receiving the first information, the method further comprises:
receiving third information, wherein the third information is used to activate the FSTD.

12. A communication method, wherein the method comprises:

receiving capability information, wherein the capability information indicates that a terminal device supports frequency switched transmit diversity FSTD of a plurality of mutually independent transmit chains Txs;
sending first information, wherein the first information indicates an uplink resource, the uplink resource comprises a plurality of resource sets, and the plurality of resource sets respectively correspond to the plurality of Txs; and
receiving uplink information on the plurality of resource sets.

13. The method according to claim 12, wherein a quantity of the plurality of Txs is 2 or 4, and powers of the plurality of Txs are the same.

14. The method according to claim 12 or 13, wherein before sending the first information, the method further comprises:
receiving second information, wherein the second information indicates the quantity of the plurality of Txs and/or a power of each of the plurality of Txs.

15. The method according to any one of claims 12 to 14, wherein before sending the first information, the method further comprises:
determining the plurality of resource sets from the uplink resource.

16. The method according to claim 15, wherein determining the plurality of resource sets from the uplink resource comprises:
determining the plurality of resource sets from the uplink resource based on the powers of the plurality of Txs.

17. The method according to claim 16, wherein determining the plurality of resource sets from the uplink resource based on the powers of the plurality of Txs comprises:

determining the plurality of resource sets from the uplink resource based on a first proportion, wherein the first proportion is a proportion of a power of a Tx corresponding to each resource set to a sum of the powers of the plurality of Txs.

18. The method according to claim 17, wherein a proportion of the uplink resource occupied by each of the plurality of resource sets is equal to a first proportion corresponding to each resource set.

19. The method according to claim 17, wherein a proportion of the uplink resource occupied by each of M resource sets in the plurality of resource sets is less than a first proportion corresponding to each of the M resource sets, a proportion of the uplink resource occupied by each of N resource sets in the plurality of resource sets is greater than a first proportion corresponding to each of the N resource sets, a sum of M and N is equal to the quantity of the plurality of Txs, and M and N are positive integers.

20. The method according to any one of claims 12 to 19, wherein the first information comprises first indication information, and the first indication information indicates a relationship between sizes of the plurality of resource sets.

21. The method according to any one of claims 12 to 14, wherein before sending the first information, the method further comprises:

receiving a plurality of reference signals, wherein the plurality of reference signals respectively correspond to the plurality of Txs; and
determining the plurality of resource sets based on the plurality of reference signals.

22. The method according to any one of claims 12 to 14, and 21, wherein the first information comprises information that separately indicates the plurality of resource sets.

23. The method according to any one of claims 12 to 22, wherein before sending the first information, the method further comprises:
sending third information, wherein the third information is used to activate the FSTD.

24. The method according to any one of claims 12 to 23, wherein receiving the uplink information on the plurality of resource sets comprises:
separately performing channel estimation, equalization, demodulation, and joint decoding on the plurality of resource sets to obtain the uplink information.

25. A communication apparatus, wherein the communication apparatus comprises a module configured to perform the method according to any one of claims 1 to 11, or comprises a module configured to perform the method according to any one of claims 12 to 24.

26. A communication apparatus, wherein the communication apparatus comprises a processor, and the processor is configured to perform the method according to any one of claims 1 to 11, or is configured to perform the method according to any one of claims 12 to 24.

27. A computer-readable storage medium, wherein the computer-readable storage medium comprises instructions, and when the instructions are run by a processor, the method according to any one of claims 1 to 11 is implemented, or the method according to any one of claims 12 to 24 is implemented.

28. A computer program product, wherein the computer program product comprises instructions, and when the instructions are run by a processor, the method according to any one of claims 1 to 11 is implemented, or the method according to any one of claims 12 to 24 is implemented.

FIG. 1

EP 4 709 004 A1

| Subcarrier 1-element 1 |
| Subcarrier 2-element 2 |
| Subcarrier 3-element 3 |
| Subcarrier 4-element 4 |
| ⋮ |
| Subcarrier N-element N |

⇒ Tx1

| Subcarrier 1-element 1 |
| Subcarrier 2-element 2 |
| Subcarrier 3-element 3 |
| Subcarrier 4-element 4 |
| ⋮ |
| Subcarrier N-element N |

| Subcarrier 1-element 1' |
| Subcarrier 2-element 2' |
| Subcarrier 3-element 3' |
| Subcarrier 4-element 4' |
| ⋮ |
| Subcarrier N-element N' |

⇒ Tx2

FIG. 2

FIG. 3

FIG. 4

| Subcarrier 1-element 1 |
|---|
| Subcarrier 2-element 2" |
| Subcarrier 3-element 3 |
| Subcarrier 4-element 4" |
| ⋮ |
| Subcarrier N-element N" |

⟹ Tx1

| Subcarrier 1-element 1 |
|---|
| Subcarrier 2-element 2 |
| Subcarrier 3-element 3 |
| Subcarrier 4-element 4 |
| ⋮ |
| Subcarrier N-element N |

| Subcarrier 1-element 2 |
|---|
| Subcarrier 2-element 1" |
| Subcarrier 3-element 4 |
| Subcarrier 4-element 3" |
| ⋮ |
| Subcarrier N-element N–1" |

⟹ Tx2

FIG. 5

| Subcarrier 1-element 1 |
| :---: |
| 0 |
| Subcarrier 3-element 3 |
| 0 |
| ⋮ |
| 0 |

⟹ Tx1

| Subcarrier 1-element 1 |
| :---: |
| Subcarrier 2-element 2 |
| Subcarrier 3-element 3 |
| Subcarrier 4-element 4 |
| ⋮ |
| Subcarrier N-element N |

| 0 |
| :---: |
| Subcarrier 2-element 2 |
| 0 |
| Subcarrier 4-element 4 |
| ⋮ |
| Subcarrier N-element N |

⟹ Tx2

FIG. 6(a)

| Subcarrier 1-element 1 |
|---|
| ⋮ |
| Subcarrier N/2-element N/2 |
| 0 |
| ⋮ |
| 0 |

⇒ Tx1

| Subcarrier 1-element 1 |
|---|
| Subcarrier 2-element 2 |
| Subcarrier 3-element 3 |
| Subcarrier 4-element 4 |
| ⋮ |
| Subcarrier N-element N |

| 0 |
|---|
| ⋮ |
| 0 |
| Subcarrier N/2+1-element N/2+1 |
| ⋮ |
| Subcarrier N-element N |

⇒ Tx2

FIG. 6(b)

| Terminal device | | | |
| --- | --- | --- | --- |
| Tx1 | Tx2 | ... | |

↔ 

| Network device |
| --- |

## FIG. 7

| Terminal device | Network device |
| --- | --- |

S801: Capability information, where the capability information indicates that the terminal device supports frequency switched transmit diversity FSTD of a plurality of mutually independent transmit chains Tx

S802: First information, where the first information indicates an uplink resource, the uplink resource includes a plurality of resource sets, and the plurality of resource sets respectively correspond to the plurality of Txs

S803: Send uplink information on the plurality of resource sets

## FIG. 8

| Terminal device | Network device |
| --- | --- |

S801: Capability information

S804: Third information

S805: Second information

S802: First information

S803: Send uplink information on a plurality of resource sets

## FIG. 9

Terminal device

Network device

S801: Capability information

S806: A plurality of reference signals

S807: Determine a plurality of resource sets based on the plurality of reference signals

S802: First information

S803: Send uplink information on the plurality of resource sets

FIG. 10

| RB 1 |
| RB 2 |
| RB 3 |
| RB 4 |
| RB 5 |
| RB 6 |
| RB 7 |
| RB 8 |

Resource set of a Tx1

| RB 9 |

Uplink partial bandwidth

| RB 10 |
| RB 11 |
| RB 12 |
| RB 13 |
| RB 14 |
| RB 15 |
| RB 16 |

Resource set of a Tx2

| RB 17 |
| RB 18 |

FIG. 11

FIG. 12

EP 4 709 004 A1

FIG. 13

FIG. 14

Communication apparatus 150

1501

Processor

Instruction

1503

Memory

Instruction

Transceiver

Radio frequency circuit

Antenna

1502

FIG. 15

160

1601

Processor

CPU 0

CPU 1

1603

Memory

1602

Communication interface

1604

Output device

1605

Input device

1606

FIG. 16

## INTERNATIONAL SEARCH REPORT

| International application No. |
|---|
| **PCT/CN2024/085383** |

**A. CLASSIFICATION OF SUBJECT MATTER**

H04W72/0453(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VEN: WPABS: CNTXT; USTXT; EPTXT; CNABS; 3GPP: 发射分集, 频率, 链路, 天线, 载波, 能力, 终端, 资源, transmit diversity, frequency, FSTD, Tx, chain, antenna, carrier, capability, ability, UE, resource

**C. DOCUMENTS CONSIDERED TO BE RELEVANT**

| Category* | Citation of document, with indication, where appropriate, of the relevant passages | Relevant to claim No. |
|---|---|---|
| Y | CN 103067063 A (ZTE CORP.) 24 April 2013 (2013-04-24)<br>description, paragraphs 2 and 39-84 | 1-28 |
| Y | CN 114844534 A (CHINA TELECOM CORP., LTD.) 02 August 2022 (2022-08-02)<br>description, paragraphs 52-113, and claims 20 and 21 | 1-28 |
| A | US 2009202016 A1 (QUALCOMM INC.) 13 August 2009 (2009-08-13)<br>entire document | 1-28 |
| A | US 2013194988 A1 (KUBOTA KEIICHI et al.) 01 August 2013 (2013-08-01)<br>entire document | 1-28 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 May 2024** | **24 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/085383**

| Patent document cited in search report | | | Publication date (day/month/year) | Patent family member(s) | | | Publication date (day/month/year) |
|---|---|---|---|---|---|---|---|
| CN | 103067063 | A | 24 April 2013 | WO | 2013056563 | A1 | 25 April 2013 |
| CN | 114844534 | A | 02 August 2022 | | None | | |
| US | 2009202016 | A1 | 13 August 2009 | WO | 2009100212 | A2 | 13 August 2009 |
| | | | | WO | 2009100212 | A3 | 26 November 2009 |
| | | | | US | 8509291 | B2 | 13 August 2013 |
| | | | | TW | 201004176 | A | 16 January 2010 |
| | | | | KR | 20100107079 | A | 04 October 2010 |
| | | | | KR | 101260851 | B1 | 06 May 2013 |
| | | | | JP | 2011512737 | A | 21 April 2011 |
| | | | | JP | 5180323 | B2 | 10 April 2013 |
| | | | | EP | 2243228 | A2 | 27 October 2010 |
| US | 2013194988 | A1 | 01 August 2013 | GB | 201201569 | D0 | 14 March 2012 |
| | | | | GB | 2490985 | A | 21 November 2012 |
| | | | | GB | 2490985 | B | 19 June 2013 |
| | | | | WO | 2013114301 | A1 | 08 August 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310644083